(19) Europäisches Patentamt
European Patent Office
Office européen des brevets

(11) **EP 1 398 650 B1**

(12) **EUROPEAN PATENT SPECIFICATION**

(45) Date of publication and mention
of the grant of the patent:
**26.05.2010 Bulletin 2010/21**

(21) Application number: **02736072.6**

(22) Date of filing: **12.06.2002**

(51) Int Cl.:
*G02B 5/02* (2006.01)      *G02B 5/08* (2006.01)
*G09F 13/04* (2006.01)

(86) International application number:
**PCT/JP2002/005855**

(87) International publication number:
**WO 2002/103415 (27.12.2002 Gazette 2002/52)**

(54) **OPTICAL ELEMENT AND DISPLAY UNIT USING THIS**

OPTISCHES ELEMENT UND ANZEIGEEINHEIT DAMIT

ELEMENT OPTQUE ET SON UNITE D'AFFICHAGE

(84) Designated Contracting States:
**DE FR GB IT**

(30) Priority: **15.06.2001 JP 2001182210**

(43) Date of publication of application:
**17.03.2004 Bulletin 2004/12**

(73) Proprietor: **FUJIFILM Corporation
Minato-ku
Tokyo (JP)**

(72) Inventor: **KIMURA, Koichi
Fuji Photo Film Co., Ltd.
Fujinomiya-shi,
Shizuoka 418-8666 (JP)**

(74) Representative: **Stevens, Jason Paul et al
Dehns
St Bride's House
10 Salisbury Square
London
EC4Y 8JD (GB)**

(56) References cited:
EP-A- 0 751 340        WO-A-00/29785
JP-A- 6 324 333        JP-A- 8 221 013
JP-A- 2001 005 417    US-A- 5 442 467
US-B1- 6 208 466

**Description**

[TECHINICAL FIELD]

The present invention relates to a plane-shaped optical device which introduces a surface-shaped incident light therein and displays a desired image and a display apparatus using the same optical device and, in particular, to a multipurpose optical device ideal for use in a display apparatus such as an advertising signboard or an illuminated signboard.

[BACKGROUND ART]

As a display apparatus such as an advertising signboard or an illuminated signboard which is used generally, for example, there are known the following display apparatus.

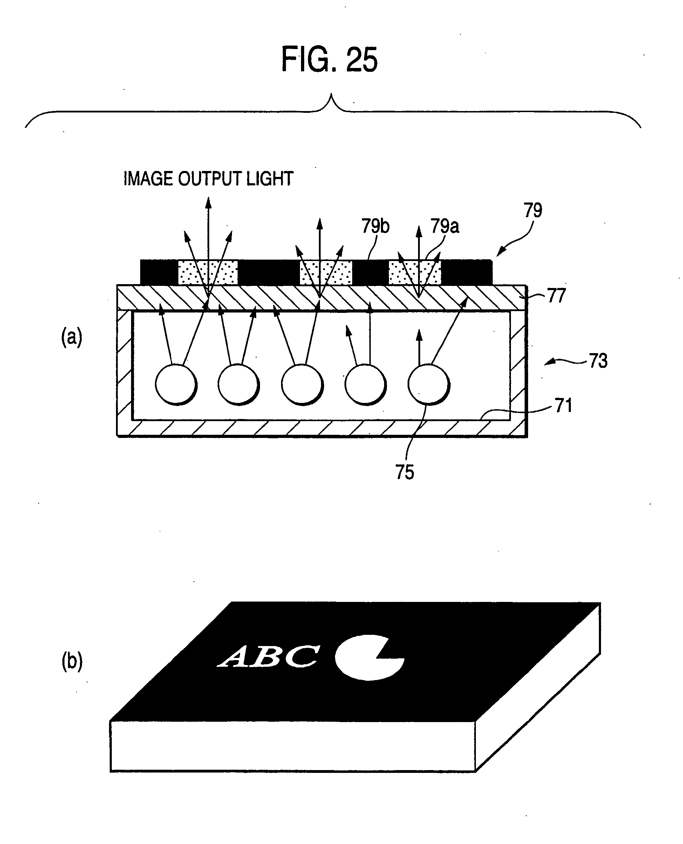

Firstly, there is known a display apparatus structured such that, as shown in Fig. 25 (a), a plurality of luminous members 75 such as fluorescent lamps are arranged within a light source box 73 with a diffusively reflecting member 71 mounted on the inner surface thereof, and lights from these luminous members 75 are illuminated through a diffusing plate 77 onto a transmissive image film 79 to thereby display the images that are previously recorded in the transmissive image film 79. In this display apparatus, the image portion 79a of the transmissive image film 79 has a light transmission property and thus, as shown in Fig. 25 (b), the lights from the luminous members 75 are output as image output lights; and, on the other hand, in the opaque portions 79b of the transmissive image film 79 corresponding to the shadows of the images, the lights from the luminous members 75 are absorbed by an absorbent (such as pigment or dye) which forms the opaque portion 79b. Thanks to this, the shading and hue of the images can be expressed, which makes it possible to display the images according to the quality of the images of the transmissive image film 79.

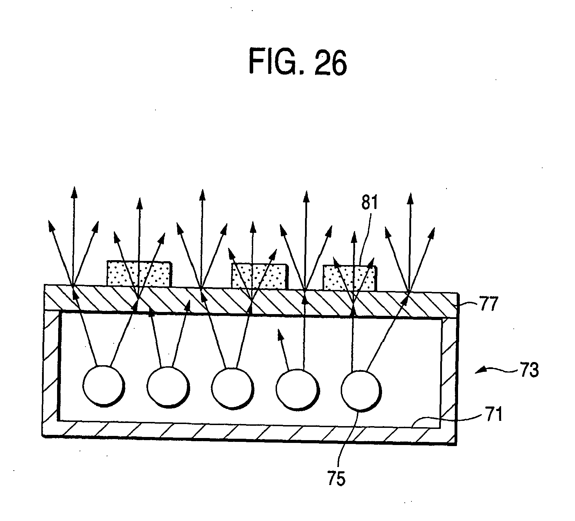

Also, in another display apparatus structured such that, as shown in Fig. 26, transmissive image films 81 are bonded only on the portions of the display apparatus that are necessary for image display, that is, on the image output portions thereof, lights from the luminous members 75 are diffused by a diffusing plate 77 and the image output lights are output from the areas of the display apparatus on which the transmissive image films 81 are bonded to thereby display the images of the transmissive image films 81. According to the thus-structured display apparatus, necessary images can be displayed in arbitrary positions.

However, in the display apparatus shown in Fig. 25, since the lights illuminated onto the opaque portions 79b of the transmissive image film 79 are absorbed by the absorbent such as pigment or dye which forms the opaque portions 79b, the light use efficiency of the display apparatus is lowered. Therefore, the quantity of energy to be consumed for image display is small with respect to the total quantity of energy consumed, which raises a problem that the present display apparatus provides a display system having a low energy efficiency.

Also, in the display apparatus shown in Fig. 26, the lights from the luminous members 75 are transmitted through the other portions of the display apparatus than the image output portions thereof, which degrades greatly the quality of the images to be displayed. In order to display high quality images, opaque absorbing members must be disposed in the other portions to serve as the shadows of the display apparatus than the image output portions thereof and also a special transparent image film must be prepared using printing means. In this manner, for the high quality image display, a process for manufacturing the present display apparatus is unfavourably complicated.

The present invention aims at eliminating the above-mentioned drawbacks found in the conventional display apparatus. Accordingly, it is an object of the invention to provide an optical device which is enhanced in energy efficiency and can provide a high quality image display, and a display apparatus using the same optical device.

[DISCLOSURE OF THE INVENTION]

In attaining the above object, there is provided a planar optical device, comprising: a total-reflection optical member having a total reflection surface at a side opposite to an incident-light introduction side thereof; a light source that illuminates the incident-light introduction side of the total-reflection optical member, wherein the total-reflection optical member has the property that at least part of the incident light introduced into the total-reflection optical member is totally reflected at the total reflection surface of the total-reflection optical member and that the incident light is substantially not transmitted through the total reflection surface; and optical coupler elements, disposed adjacently to each other at desired positions on the total reflection surface of said total-reflection optical member according to images to be displayed,

wherein the optical coupler elements destroy the total reflection condition of the incident light on the total reflection surface of the total-reflection optical member so as to couple the incident light and allow the transmission of the incident light through the total reflection surface; wherein the total-reflection optical member comprises, disposed therein between the incident-light introduction side and the total reflection surface, an optical element layer which selects a light path, such that: light introduced into the total - reflection optical member through the incident-light introduction side is then incident on the optical layer which selects the light path thereof, and components of the light incident on the optical layer that have an angle larger then a total reflection critical angle of the total reflection surface are transmitted through the optical layer and are incident on the total reflection surface and components of the light incident on the optical element having an angle less than a total reflection critical angle of the total reflection surface are not transmitted through the optical layer and are thus not incident on the total reflection surface.

According to the present optical device, at least part of the introduced surface-shaped incident lights are totally reflected on the total reflection surface of the total-reflection optical member and are thereby returned to the incident light introduction side of the optical device, so that the incident lights introduced into the optical device are substantially prevented from being emitted to the front portions of the optical paths of the incident lights. On the other hand, at and from the desired position where the optical coupler elements are disposed, with the total reflection condition of the total-reflection optical member destroyed, the incident lights are connected by the optical coupler elements and are then emitted from the total reflection surface of the total-reflection optical member to the front portions of the optical paths of the incident lights.

Due to this, there can be provided an optical device in which, only in the positions of the optical device where the optical coupler elements are disposed, the incident lights can be emitted to the optical path front portions of the incident lights. Therefore, the surlace-shaped incident lights can be directly introduced as they are surface shaped, which not only allows the optical device to emit the lights with enhanced energy efficiency but also makes it possible to set the mounting positions of the optical coupler elements arbitrarily, so that the desired images can be displayed with high quality at the arbitrary positions of the total-reflection optical member.

Further, the optical element for selecting the optical paths of the surface-shaped incident lights is disposed within the optical device and the incident lights are introduced in a surface shape into the optical element for selecting the optical paths of the incident lights. In the case of the thus introduced surface-shaped incident lights, only the incident lights in a specific direction are transmitted by the optical element for selecting the optical path and thus substantially all of the thus transmitted incident lights are reflected totally by the interfaces between layers constituting the present optical device.

Preferably, the device additionally comprises a further optical layer, disposed within the total-reflection optical member between the incident-light introduction side and the total reflection surface, which changes a light path of light incident on said further optical layer through the incident-light introduction side and transmitted through the said further optical layer to the optical element layer which selects a light path.

In the present optical device, the optical element for changing the optical paths of the surface-shaped incident lights is disposed within the optical device and the incident lights are introduced in a surface shape into the optical element for changing the optical paths of the incident lights. The optical paths of the thus introduced surface-shaped incident lights are changed in a specific direction or in an arbitrary direction by the optical element for changing the optical path and thus substantially all of the incident lights with their optical paths changed are reflected totally by the interfaces of layers constituting the optical device.

The present optical device can include both an optical element for changing the optical paths of the surface-shaped incident lights and an optical element for selecting the optical paths of the surface-shaped incident lights are disposed in the order starting from the incident light introduction side in the thickness direction of the optical device; and the incident lights are introduced in a surface shape into to the optical element for changing the optical path. In the case of the incident lights introduced, the optical paths thereof are changed in a specific direction or in an arbitrary direction by the optical element for changing the optical path and further only the incident lights in a specific direction are transmitted by the optical element for selecting the optical path, so that substantially all of the incident lights introduced into the present optical device are reflected totally on by the interfaces between layers constituting the present optical device.

According to the present optical device, each of the above-mentioned optical coupler elements includes optical path changing unit for changing the optical path of the light taken out by the present optical coupler element.

In the present optical device, by changing the optical path of the taken-out light by the optical coupler element, the lights to be emitted from the optical device can be condensed or diffused in a specific direction.

According to the present optical device, the above-mentioned optical path changing unit changes the optical path of the taken-out light by refraction.

In the present optical device, since the optical path of the light taken out from the optical coupler element is changed by refraction, the optical path of the light can be changed while maintaining the quantity of the light as it is.

According to the present optical device, the optical path changing unit includes any one of a lens array, a prism array, and a refractive index distributed lens body.

In the present optical device, by properly selecting an optical element composed of any one of a lens array, a prism array, and a refractive index distributed lens body which is suitable for mass production, not only the cost of the optical device can be reduced but also the optical device is able to fulfil good performance.

According to the present optical device, the optical path changing unit changes the optical path of the taken-out light by refraction.

In the present optical device, since the optical path of the light taken out from the optical coupler element is changed by refraction, the optical path of the light can set with high accuracy.

According to the present optical device, the optical path changing unit includes any one of a volume hologram, a diffraction grating of a phase modulation type and a diffraction grating of an amplitude modulation type.

In the present optical device, mass transfer production is possible according to e.g. a photopolymer method or an injection moulding method, so that the cost' of the optical device itself can be reduced.

According to the present optical device, the optical path changing unit changes the optical path of the taken-out light by light diffusion or by light scattering.

In the present optical device, since the optical path of the light taken out from the optical coupler element is changed by light diffusion or by light scattering, the taken-out light can be emitted in an arbitrary direction.

According to the present optical device, the optical path changing unit includes any one of a porous body, a different refractive dispersing member or distributed body, and a light diffusing or light scattering body having an uneven (convex-surface and concave-surface) portion on the surface thereof.

In the present optical device, by properly selecting a plate made of a porous material, a plate made of dispersed or distributed materials having different refractive indexes, and a light diffusing or light scattering plate which are suitable for mass production, the cost of the optical device itself can be reduced.

According to the present optical device, the optical coupler element includes specific wave component absorbing unit capable of absorbing and emitting the specific wave component of the light taken out by the optical coupler element.

In the present optical device, since the specific wave component of the light taken out by the optical coupler element is absorbed and emitted, even in the case of the same kinds of incident lights, there can be selectively obtained emission lights having a plurality of colours.

According to the present optical device, the optical coupler element includes light emitting unit excited by receiving the taken-out light to thereby emit the light.

In the present optical device, because it includes the light emitting unit which can be excited by the taken-out light to thereby emit the light, there can be selectively obtained emission lights having a plurality of colours according to the colours developed by the light emitting unit.

According to the present optical device, a reflecting layer, which introduces the incident lights reflected by the total-reflection optical member and returned to an incident light introduction side of the optical device again to the optical device, is disposed on an incident light introduction side of the total-reflection optical member.

In the present optical device, since the incident lights reflected by the total-reflection optical member are returned to the incident light introduction side of the optical device, within a medium having a total reflection surface, there can be substantially eliminated light introduction, light storage, and light confinement; and also, due to provision of the reflecting layer, the incident lights, which have been once introduced into the optical device and reflected, are reflected to the optical path front portion by the reflecting layer and are thereby introduced again into the optical device, thereby recycling the light, so that the use efficiency of the light can be enhanced and thus the efficiency of the optical device can be enhanced.

And, according to the present invention, there is provided a display apparatus, comprising: the optical device as set forth in any one of the above-mentioned aspects (1)-(12) of the invention; and, a plane light source to be disposed on the incident light introduction side of the optical device, characterized in that lights from the plane light source are introduced into the optical device and the light taken out from the above-mentioned total-reflection optical member by the above-mentioned optical coupler elements are emitted to thereby display images.

According to the present display apparatus, by introducing the surface-shaped lights from the plane light source into the optical device including the optical coupler elements, while enhancing the energy efficiency thereof, the desired images can be displayed at arbitrary positions with high quality.

According to the present display apparatus, each of the above-mentioned optical coupler elements is a transparent image film in which images are recorded and also which has a transmission property.

According to the present display apparatus, by using the transmissive image films as the optical coupler elements, the images can be displayed according to the images recorded in the transmissive image films, so that the images can be displayed simply and highly minutely.

According to the present display apparatus, each of the optical coupler elements includes fluorescent substance and the plane light source emits lights respectively including such a wavelength as to be able to excite the fluorescent substances.

According to the present display apparatus, for example, the fluorescent substances of the optical coupler element are excited by the plane light source emitting an UV light to emit lights, whereby the images can be displayed according to the arrangement patterns of the fluorescent-substances.

According to the present display apparatus, in the front portions of the optical paths of the optical coupler elements, an optical filter for absorbing a light having a light emitting wavelength is disposed.

According to the present display apparatus, in case where the light emitting wavelength of a light source is in the range of the wavelengths of a visible light, by disposing an optical filter for absorbing a visible light in the front portions of the optical paths of the optical coupler elements, even in a bright place, high contrast can be obtained and the images can be displayed which high quality. Also, in case where each of the optical coupler elements includes fluorescent substances, since part of the lights emitted by the fluorescent substances are allowed by the optical filter to pass therethrough but the other remaining components of the lights containing the excitedly emitted light are absorbed, the images can be displayed with high contrast.

According to the present display apparatus, in the front portions of the optical paths of the optical coupler elements, an optical filter for shielding excitation-lights is disposed.

According to the present display apparatus, for example, when using a UV light source, the emission of the UV lights of the UV light source to the display side (the observer's side) can be prevented.

According to a second embodiment of an optical device of the present invention, between the total reflection surface of a total-reflection optical member and optical coupler elements, an optical filter for reflecting an emission wavelength components of the fluorescent substance and allowing transmission of the wavelength components of the incident lights.

According to the present display apparatus, the incident lights are transmitted through the optical filter and are illuminated onto the fluorescent substances to thereby cause the fluorescent substances to emit their lights. Of the lights that are emitted by the fluorescent substances, the lights emitted toward the back portions of the optical paths thereof are reflected to the front portions of the optical paths by the optical filter and are thus emitted from the display apparatus. This enhances the light use efficiency of the display apparatus, so that the display apparatus is able to display the images with higher brightness.

According to the present display apparatus, the optical filter is a light interference filter including a dielectric multilayer film.

According to the present display apparatus, due to use of the dielectric multilayer film, an arbitrary wavelength selection reflecting film can be formed using a simple structure having a large area and thus, by use of the incident angle dependence of the reflection wavelength of the wavelength selection reflecting film, there can be formed an optical filter easily.

According to the present display apparatus, the optical filter is a Bragg reflecting filter including a cholesteric liquid crystal.

According to the present display apparatus, due to use of the Bragg reflecting filter including a cholesteric liquid crystal, an optical filter can be formed at a low cost.

According to the present display apparatus, the wavelengths of the incident lights are set in the range of 350 nm - 400 nm.

According to the present display apparatus, since the wavelengths of the incident lights are set in the range of 350 nm - 400 nm, an optical member of a low cost can be used and also the light emitting brightness of the fluorescent substances can be enhanced to thereby be able to display the images with higher brightness.

According to the present display apparatus, each of the fluorescent substances emits a visible light.

According to the present display apparatus, because the fluorescent substances emit a visible light, from the light source of a UV light, a visible light display can be executed with high efficiency.

According to the present display apparatus, the fluorescent substances include light emitting substances respectively emitting red, green and blue lights which can be combined together according to the images to be displayed.

According to the present display apparatus, since the fluorescent substances respectively emit red, green and blue lights, by combining together the light emitting substances according to the display images, the images can be displayed with full colours.

[BRIEF DESCRIPTION OF THE DRAWINGS]

Fig. 1 is a schematic structure view of an optical device according to the invention;

Fig. 2 is a concrete structure view of a total-reflection optical member;

Fig. 3 shows a diffraction grating of a transmission type; specifically, Fig. 3 (a) is a view of a volume hologram, Fig. 3 (b) is a view of a diffraction grating of a relief type, and Fig. 3 (c) is a view of a diffraction grating of a refractive index modulation type;

Fig. 4 shows a light diffusing plate; specifically, Fig. 4 (a) is a view of a plate of porous material, Fig. 4 (b) is a view of a plate in which substances having different refractive indexes are distributed or dispersed, and Fig. 4 (c) is a view of a light diffusing plate or a light scattering plate including an uneven surface;

Fig. 5 is a view of the layer structure of a light interference filter;

Fig. 6 is a view of the structure of an optical device with a light interference filter incorporated therein;

Fig. 7 is a graphical representation of the wavelength area of incident lights;

Fig. 8 is graphical representations of variations in spectral transmittances with respect to wavelengths by incident angle;

Fig. 9 is graphical representations of spectral transmittances with respect to incident angles by wavelength;

Fig. 10 shows the relationship between incident angles and the average refractive indexes of the respective mediums of an optical device in the respective interfaces of the optical device in which an optical element for changing an optical path, an optical element for selecting the optical path, a transparent medium u, a transparent medium v, and a transparent medium w situated on the front side of a total reflection surface are disposed in this order;

Fig. 11 is a view of the incident angles of incident lights illuminated onto the optical element for selecting the optical path;

Fig. 12 is a graphical representation of the spectral transmittances of the optical element for selecting the optical path with respect to the wavelengths of the incident lights;

Fig. 13 is a view of optical paths inside and outside the optical element for selecting the optical path;

Fig. 14 shows an optical coupler element for changing the optical path of the incident light by refraction; specifically, Fig. 14 (a) is a view of a lens array, Fig. 14 (b) is a view of a prism array, and Fig. 14 (c) is a picture for showing a refractive index distribution lens member;

Fig. 15 shows an optical coupler element for diffusing or scattering a light taken out thereby; specifically, Fig. 15 (a) is a view of a plate composed of a porous material, Fig. 15 (b) is a view of a plate in which materials having different refractive indexes such as high-refractive-index particles are dispersed or distributed, and Fig. 15 (c) is a view of a light diffusing plate or a light scattering plate including an uneven surface;

Fig. 16 is a structure view of a first modification of the first embodiment according to the invention, in which an optical element for selecting an optical path is composed of a liquid crystal film;

Fig. 17 is views of spectral transmittances given by the above optical element for selecting the optical paths of incident lights;

Fig. 18 is a structure view of a second modification of the first embodiment according to the invention, in which a total-reflection optical member is formed of a prism;

Fig. 19 is a view of the section structure of the above total-reflection optical member;

Fig. 20 is a structure view of a second embodiment of an optical device according to the invention;

Fig. 21 is a structure view of a display apparatus according to the invention;

Fig. 22 is a view of a structure in which an optical filter for absorbing lights having a wavelength existing in the light emitting wavelength area of a light source is disposed in the front portion of the optical path of an optical coupler element;

Fig. 23 is a view of a structure in which an optical filter for shielding the excitedly emitted lights of fluorescent substances is disposed in the front portion of the optical path of the optical coupler element;

Fig. 24 shows the other examples of the structure of the total-reflection optical member, specifically, Figs. 24 (a) to (e) show them respectively;

Fig. 25 shows the structure of a conventional display apparatus such as an advertising signboard or an illuminated signboard which is generally used, and the display state of the display apparatus; and,

Fig. 26 is a structure view of a conventional display apparatus in which a transmissive image film is bonded only to the image output portion thereof.

By the way, in the drawings, reference character 3 designates a total-reflection optical member, 4 an optical coupler element, 6 an optical filter, 10 an optical element for changing the optical path of an incident light, 12, 13 optical elements for selecting the optical path, 14 a transparent medium, 16 a transparent medium (air), 20 a substance having different refractive indexes, 22, 52, 58 total reflection surfaces, 26 a transparent electrode, 28 an orientation layer, 30 a cholesteric liquid crystal layer, 36 an optical connection medium, 50 a microprism array, 54 a prism, 56 a transparent medium, 60 a plane light source, 62 a diffusive reflecting member, 68 an optical filter, 69 an optical filter, 100, 200 optical devices, 300 a display apparatus, 0, $\theta_1$, $\theta_2$, $\theta_3$ incident angles, $_c$ a total-reflection critical angle, and $\lambda$ a wavelength, respectively.

[BEST MODE FOR CARRYING OUT THE INVENTION]

Now, description will be given below of preferred embodiments of an optical device and a display apparatus according to the invention with reference to the accompanying drawings.

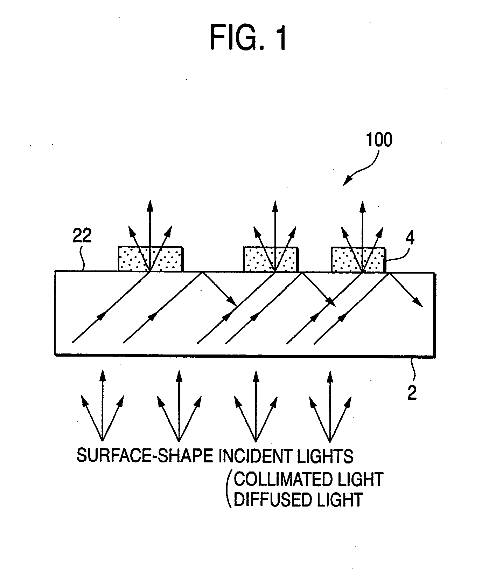

Fig. 1 shows the schematic view of the structure of a first embodiment of an optical device according to the invention. An optical device 100 according to the present embodiment comprises a plane-shaped total-reflection optical member 2, and optical coupler elements 4 which are disposed on the surface of the total-reflection optical member 2 on the opposite side to the incident light introduction side of the total-reflection optical member 2 in such a manner that they are arranged adjacently to one another according to the form of images to be displayed. The total-reflection optical member 2 is formed such that, when surface-shaped incident lights are introduced into the optical device 100, the thus introduced incident lights are totally reflected by the surface (total reflection surface 22) of the total-reflection optical member 2 which is situated in the front portions of the optical paths of the incident lights. And, in the areas of the total-reflection optical member 2 where the optical coupler elements 4 are disposed, the total reflection condition of the incident lights is destroyed so that the incident lights are connected to the optical coupler elements 4 and are then emitted to the front portions of the optical paths thereof. On the other hand, in the remaining areas of the total reflection surfaces of the total-reflection optical member 2 where the optical coupler elements 4 are not disposed, the incident lights are totally reflected that the incident lights are substantially prevented from being transmitted through the total-reflection optical member 2.

The optical coupler elements 4 are disposed on the total reflection surface 22 such that they are bonded thereto at desired positions thereof; however, they may also be disposed such that they are situated sufficiently adjacent to the total reflection surface 22. In case where the distance between the optical coupler elements 4 and total reflection surface 22 is set substantially $\lambda$ /10 ($\lambda$ expresses a wavelength) or less, there can be provided similar adjacent-field optical coupling similar to the case where the optical coupling elements 4 are bonded to the total reflection surface 22.

As the incident lights to be introduced into the total-reflection optical member 2, there can be used lights which are illuminated in the form of surface shapes. The incident lights may be either collimated lights or diffused lights; and, the incident lights may be introduced from outside the total-reflection optical member 2, or may be introduced from a light source incorporated in the interior of the total-reflection optical member 2. In the case of the collimated lights, the incident lights respectively having a specific incident angle component can be supplied to the total-reflection optical member 2, which makes it possible to enhance the light use efficiency of the optical device. On the other hand, in the case of the diffused lights, the incident lights from various directions can be introduced into the total-reflection optical member 2, which makes it possible to use an arbitrary low-cost plane-shaped light source. Also, in case where the light source is incorporated in the interior of the total-reflection optical member 2, since the lights emitted from the light source are introduced directly to the interior of the total-reflection optical member 2, the optical device and light source can be formed as an integrally united body, which makes it possible not only to reduce the size of the optical device but also to enhance the light introduction efficiency of the optical device. On the other hand, in case where the light source is disposed outside the total-reflection optical member 2, the freedom of design of the optical device 100 can be enhanced and there can also be used a large-sized and arbitrary external plane light source, thereby being able to increase the output of the optical device easily.

As the above-mentioned incident lights, there can be used lights respectively having a waveform existing within a specific wavelength area including a wavelength covering a UV light, a visible light such as a blue light or a green light, and an infrared light.

Also, as the kinds of the light source, for example, there can be used the followings: for example, discharge lamps such as an electronic tube lamp, that is, a fluorescent lamp or a mercury-arc lamp containing therein inert gas or mercury vapor, a neon tube lamp, and a Crookes tube lamp which are used generally and can be used as they are; a laser beam source from which a collimated light can be obtained easily; an LED which is inexpensive and has a fixed wavelength area; an inorganic or organic EL from which a surface-shaped light can be obtained; an incandescent lamp which emits a white light for filtering according to uses to thereby be able to provide an arbitrary wavelength component; a cathode-ray lamp, that is, a cathode-ray display tube such as a CRT from which a surface-shaped light to be introduced into an optical device can be obtained directly; and an FED (field emission display), that is, a plane-shaped display tube from which, similarly to the cathode-ray lamp, a surface-shaped light to be introduced into an optical device can be obtained directly.

Now, description will be given below in detail of the respective composing elements of the optical device 100.

Firstly, the total-reflection optical member 2 will be described below.

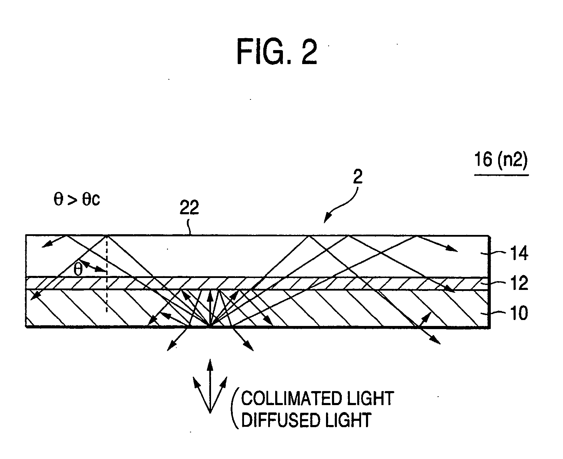

As Fig. 2 shows a concrete example of the structure of the total-reflection optical member 2, the total-reflection optical member 2 has a multilayer structure in which an optical element 10 for changing the optical path of the incident light, an optical element 12 for selecting the optical path of the incident light, and a transparent medium 14 are superimposed on top of each other in the order starting from the incident light introduction side of the total-reflection optical member 2. In the optical path front portion of the transparent medium 14 of the total-reflection optical member 2, there exists a transparent medium 16; and, the relationship between the refractive index n1 (first refractive index) of the transparent medium 14 and the refractive index n2 (second refractive index) of the transparent medium 16 is set so as to satisfy the total reflection condition of the total reflection surface 22 which serves as an interface between the transparent medium 14 and transparent medium 16. Specifically, for example, the transparent medium 14 is formed as a glass base plate (n1 = 1.5), whereas the transparent medium 16 is formed as the air (n2 = 1.0). By the way, the respective layers constituting the total-reflection optical member 2 do not absorb substantially the incident lights in the range of the wavelengths thereof to thereby prevent the losses of the incident lights and the incident light totally reflected by the total reflection surface 22; that is, the respective layers can constitute an optical member which is high in efficiency.

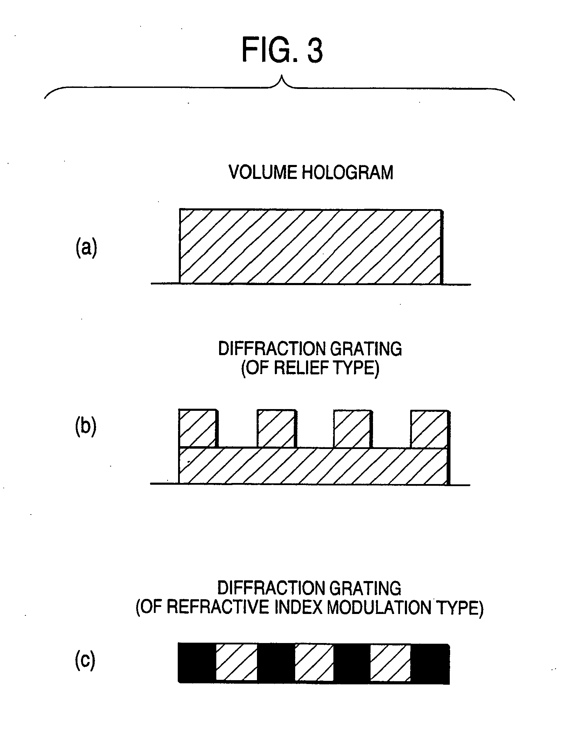

The optical element 10 for changing the optical path of the incident light is an optical element which changes the optical paths of the incident lights using refraction, diffraction, light diffusion and light reflection. As the optical element 10, for example, there can be used the following kinds of optical elements. In case where refraction is used, there are used a lens array, a prism array and a refractive index dispersing body, in which the intensity of the incident light is not lowered substantially. In case where diffraction is used, there are used such diffraction gratings of a transmission type as shown in Fig. 3. Specifically, there are used a diffraction grating of a phase modulation type and a diffraction grating of an amplitude modulation type such as a volume hologram (see Fig. 3 (a)), a diffraction grating of a relief type (see Fig. 3 (b)), and a diffraction grating of a refractive index modulation type; and, in these diffraction gratings, the angle of the optical path of the incident light can be set with high accuracy. The respective optical elements can be mass-transfer produced, for example, according to a photopolymer method or an injection molding method.

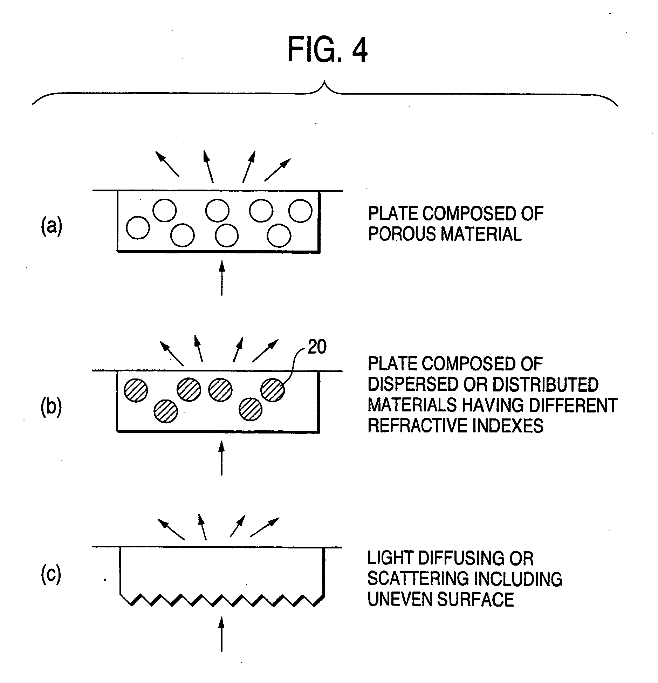

Also, in case where light diffusion is used, there are used such light diffusion plates as shown in Fig. 4. Specifically, there are used a plate formed of a porous material (see Fig. 4 (a)), a plate in which materials 20 having different refractive indexes are distributed or dispersed (see Fig. 4 (b)), and a plate formed of a light diffusion material or a light scattering material including an uneven surface (see Fig. 4 (c)). Further, in case where light reflection is used, there is used a plate formed of a light dispersing material such as micro-reflection material which reflects the light in an arbitrary direction. All of these optical elements are suitable for mass production and thus the costs thereof can be reduced easily.

The optical element 12 for selecting the optical path of the incident light is structured such that substantially all of the transmission lights selected by this optical element 12 and emitted therefrom have a larger angle component than the total-reflection critical angle of the layers situated in the optical path front portions of the incident lights, whereas the incident lights having the other angle components are selectively reflected by the optical element 12 and thus are not transmitted through the optical element 12. That is, only the incident lights having a larger angle component than the total-reflection critical angle $\theta_c$ that is the condition for causing total reflection on the interface between the transparent medium 14 and transparent medium 16 are allowed to pass through the optical element 12, whereas the incident lights having the other angle components are prevented from passing through the optical element 12. By the way, the total-reflection critical angle $\theta_c$ can be found by the following equation (1).

$$\theta_c = \sin^{-1} (n2/n1) \qquad\qquad (1)$$

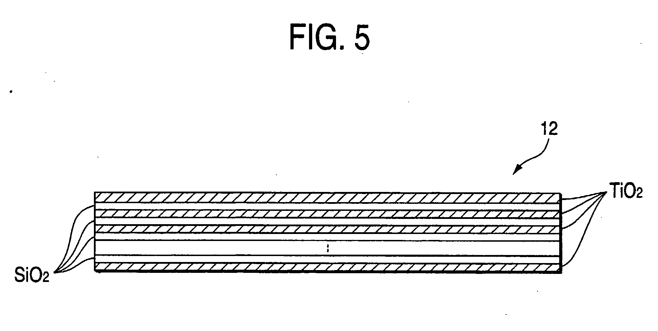

As a concrete example of the structure of the optical element 12 for selecting the optical path of the incident light, there is available a light interference filter which is made of a dielectric multilayer film. Fig. 5 shows the layer structure of this light interference filter.

The light interference filter is composed of a dielectric multilayer film structured such that materials having a high refractive index and materials having a low refractive index are sequentially superimposed on top of each other. Referring to the optical properties of the light interference filter the details of which will be discussed later, the light interference filter has a function to reflect selectively the incident lights according to the wavelengths thereof and also has such a property as to cause the wavelengths of the lights to be selectively reflected to shift to the short wavelength side according to the incident angles. Assuming here that the wavelength ranges of the incident lights are expressed as $\lambda_{is} - \lambda_{iL}$ ($\lambda_{is} < \lambda_{iL}$), in case where the selected transmission lights to be emitted from the optical element 12 have emission angles equal to or less than the total-reflection critical angle $\theta_c$, substantially all of the incident lights having wavelengths existing in the wavelength range $\lambda_{is} - \lambda_{iL}$ are selectively reflected. According to this structure, it is possible to form a reflection film which is large in area, simple in structure and can select an arbitrary wavelength; and, using the dependency of the reflection wavelengths on the incident angles of the incident lights, there can be formed an optical element 12 which is capable of selecting the optical paths of the incident lights easily.

Here, description will be given below of an example of the structure of the above light interference filter and the results of the spectral transmittances of an optical device employing the present structure of the light interference filter that are obtained through simulation.

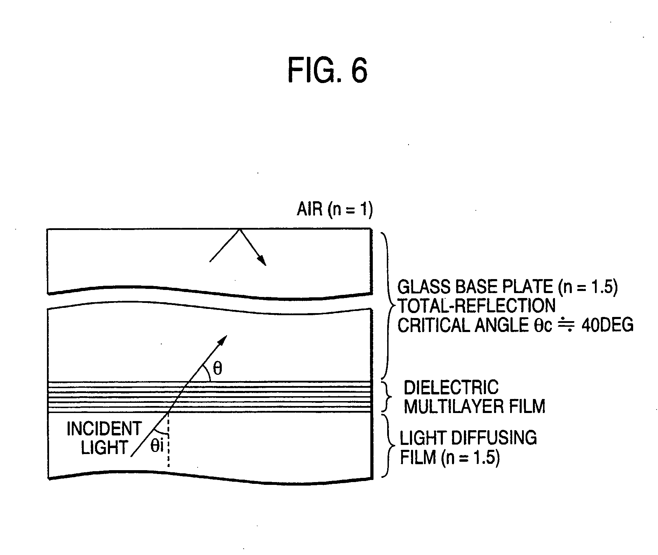

Fig. 6 shows an example of the structure of an optical device with a light interference filter incorporated therein. In this example, the optical device is structured such that, from the introduction side of an incident light, a light diffusing film (refractive index n = 1.5) serving as an optical element for changing the optical path of the incident light, a dielectric multilayer film serving as an optical element for selecting the optical path, and a glass base plate (refractive index n = 1.5) are superimposed on top of each other in this order. By the way, in the optical path front portion of the glass base plate, there exists the air (refractive index n = 1.0).

The dielectric multilayer film is formed as a multilayer film having a 29-layer structure composed of $TiO_2/SiO_2/-/SiO_2/TiO_2$; and, the optical thickness of the respective layers is set for $1/4 \lambda$ (where a wavelength $\lambda = 440$ [nm]). Also, as a light source for emitting the incident light, there is used a UV light source having a wavelength $\lambda = 350$

- 400 [nm]. And, in this case, the total-reflection critical angle $\theta_c$ is substantially 40 [deg].

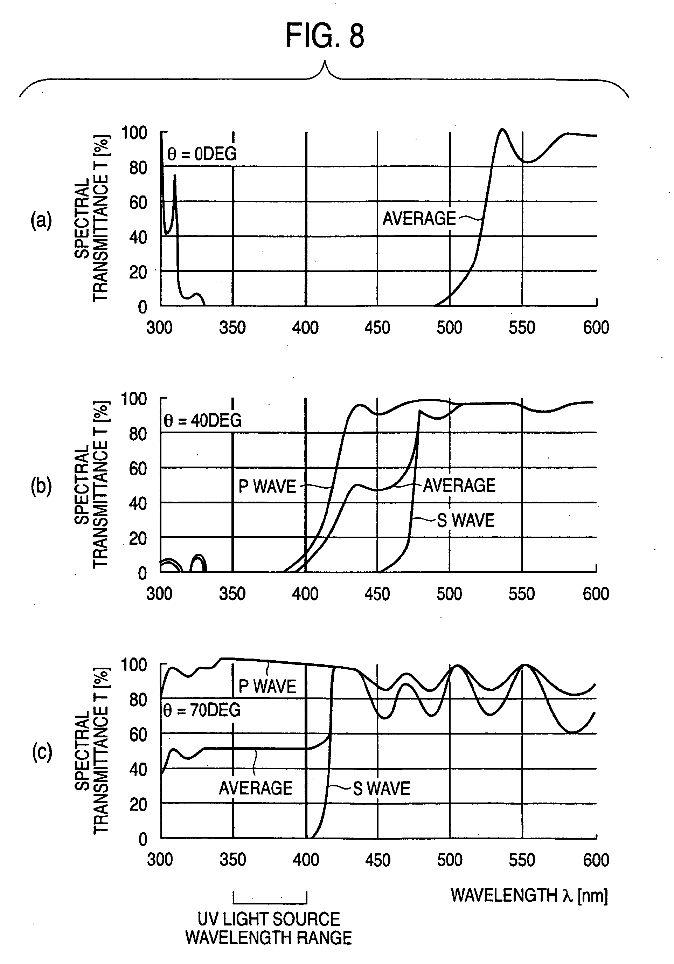

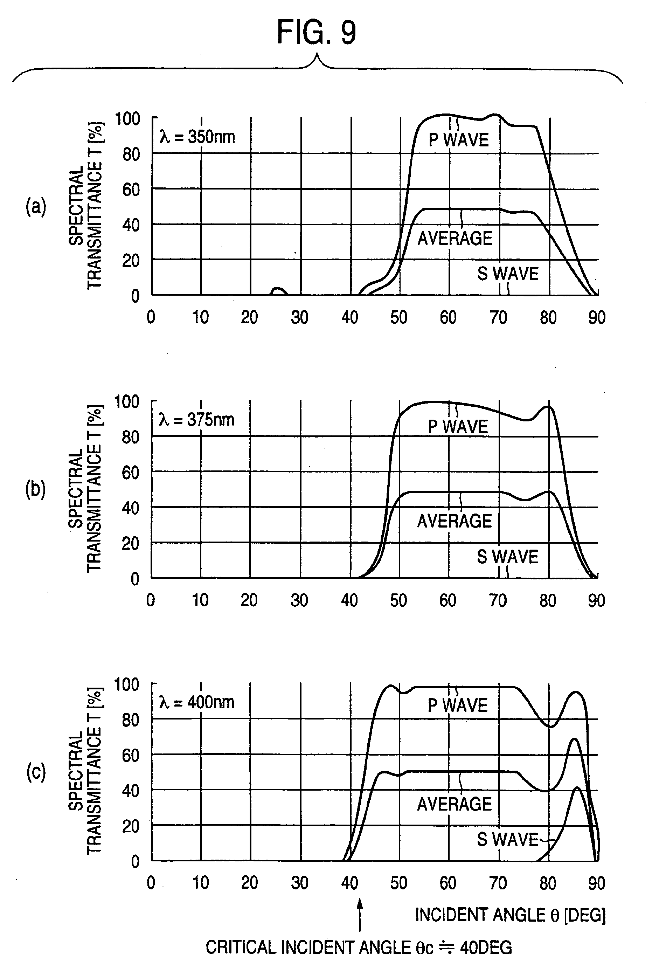

When finding the spectral transmittances of the optical device (dielectric multilayer film) under the above conditions, there are obtained the results that are shown in Figs. 8 and 9. Specifically, Fig. 8 is a graphical representation of variations in the spectral transmittances T with respect to the wavelengths $\lambda$ by incident angle $\theta$ ; and, Fig. 9 is a graphical representation of the spectral transmittances T with respect to the incident angle $\theta$ by wavelength $\lambda$.

As shown in Fig. 8 (a), when the incident angle $\theta$ is 0 [deg], the spectral transmittance T in the wavelength range of the UV light source is substantially 0 [%] and thus the incident light is not allowed to pass through the optical device. Also, as shown in Fig. 8 (b), when the incident angle $\theta$ is 40 [deg] which is just before the total-reflection critical angle $\theta_c$, the incident light is not allowed to pass through the optical device. In the case of the incident angle $\theta$ being 70 [deg] as shown in Fig. 8 (c), for the P wave, the spectral transmittance T is substantially 100 [%] and, for the S wave, the spectral transmittance T is substantially 0 [%]; and thus, the average spectral transmittance T of the P and S waves is substantially 50 [%].

Also, as shown in Fig. 9 (a), in case where the wavelength on the short wavelength side of the wavelength range of the UV light source is equal to 350 [deg], for the P wave, when the incident angle $\theta$ is equal to or larger than 50 [deg], the spectral transmittance T increases. And, in such a case as shown in Fig. 9 (b) where the center wavelength $\lambda$ is equal to 375 [nm], when the incident angle $\theta$ is equal to or larger than substantially 46 [deg], the spectral transmittance T increases. Further, in such a case as shown in Fig. 9 (c) where the center wavelength $\lambda$ is equal to 400 [nm], when the incident angle $\theta$ is equal to or larger than 42 [deg], the spectral transmittance T increases.

Therefore, in case where the incident light is totally reflected by the optical device using the P wave or the conditions of the optical device are changed to thereby properly design the spectral properties of the S wave so as to be near to those of the P wave, the incident light in the wavelength range of the UV light source can selectively reflected when the incident angle $\theta$ of the incident light is equal to or less than the total-reflection critical angle $\theta_c$, whereas the incident light is allowed to pass through the optical device when the incident angle $\theta$ is larger than the total-reflection critical angle $\theta_c$. Thanks to this, the dielectric multilayer film of the optical device can be made to function practically sufficiently as an optical element for selecting the optical path of the incident light.

By the way, in the above description, as an example of the dielectric multilayer film, there is taken a multilayer film which is composed of $TiO_2/SiO_2$; however, this is not limitative but it is preferred to select a material which is suitable for the wavelength of the light to be used. For example, for visible rays and infrared rays,

as a material having a high refractive index (a material having a refractive index of substantially 1.8 or larger), preferably, there may be used $TiO_2$, $CeO_2$, $Ta_2O_5$, $ZrO_2$, $Sb_2O_3$, $HfO_2$, $La_2O_3$, $NdO_3$, $Y_2O_3$, ZnO, and $Nb_2O_5$;

as a material having a relatively high refractive index (a material having a refractive index of substantially 1.6 - 1.8), preferably, there may be used MgO, $Al_2O_3$, $CeF_3$, $LaF_3$, and $NdF_3$; and,

as a material having a low refractive index (a material having a refractive index of substantially 1.5 or smaller), preferably, there may be used $SiO_2$, $AlF_3$, $MgF_2$, $Na_3AlF_6$, NaF, LiF, $CaF_2$, and $BaF_2$.

For ultraviolet rays,

as a material having a high refractive index (a material having a refractive index of substantially 1.8 or larger), preferably, there may be used $ZrO_2$, $HfO_2$, $La_2O_3$, $NdO_3$ and $Y_2O_3$, or, $TiO_2$, $Ta_2O_5$ and $ZrO_2$ (where the wavelength of the light is substantially 360 nm - 400 nm);

as a material having a relatively high refractive index (a material having a refractive index of substantially 1.6 - 1.8), preferably, there may be used MgO, $Al_2O_3$, $LaF_3$, and $NdF_3$; and,

as a material having a low refractive index (a material having a refractive index of substantially 1.5 or smaller), preferably, there may be used $SiO_2$, $AlF_3$, $MgF_2$, $Na_3AlF_6$, NaF, LiF, and $CaF_2$.

By the way, the above light interference filter may be a metal/dielectric multilayer film in which a metal film is added to the layer structure of a dielectric multilayer film.

And, the light interference filter composed of a dielectric multilayer film can be produced by forming a plurality of thin film materials on a transparent support base plate by EB vacuum evaporation (electronic beam vacuum evaporation) or by spattering.

Also, the thin film materials may also be organic multilayer films having different refractive indexes or organic multilayer films containing inorganic matters. In this case, since they can be formed by applying or by laminating them onto the transparent support base plate, they can be formed at a lower cost.

Now, description will be given below in detail of the optical properties of the optical element 10 for changing the optical path of the incident light and optical element 12 for selecting the optical path.

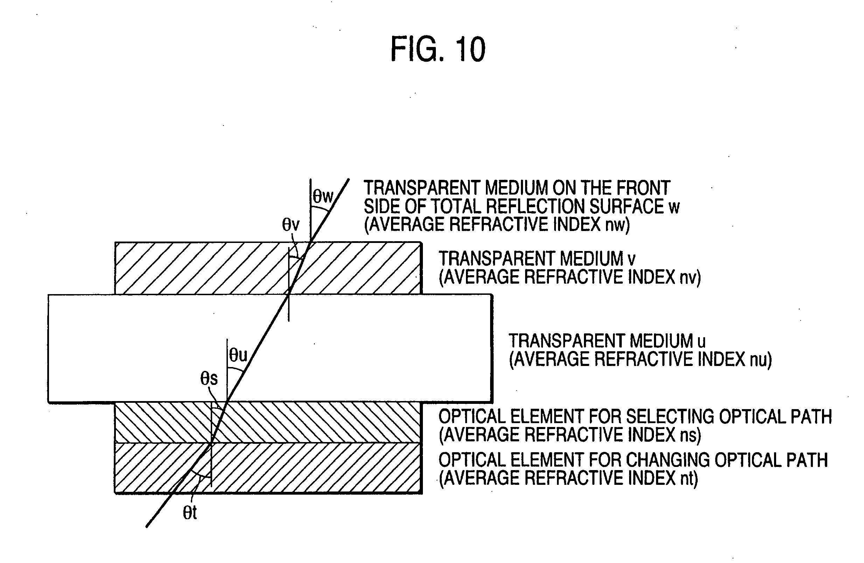

Firstly, let us assume that the optical element 10 for changing the optical path changes the optical path, for example, by refraction. As shown in Fig. 10, in the case of an optical device in which an optical element (average refractive index nt) for changing the optical path, an optical element (average refractive index ns) for selecting the optical path, a transparent medium u (average refractive index nu), a transparent medium v (average refractive index nv), and a transparent medium w (average refractive index nw) situated on the front side of a total reflection surface are arranged in this order, assuming that an interface between the transparent medium v and transparent medium w is a total reflection surface, the relationship between the incident angles of the respective interfaces and the average refractive indexes of the respective mediums can be expressed by the following equation (2):
That is,

$$nv \cdot \sin \theta v = nw$$

$$nu \cdot \sin \theta u = nv \cdot \sin \theta v = nw$$

$$ns \cdot \sin \theta s = nu \cdot \sin \theta u = nw$$

$$nt \cdot \sin \theta t = ns \cdot \sin \theta s = nw \qquad (2)$$

In this equation, $\theta t$, $\theta s$, $\theta u$, and $\theta v$ are respectively the optical path angles of the respective mediums.
Therefore, the optical element 10 for changing the optical path must output lights containing at least lights having such an angle $\theta t$ as to be able to satisfy the condition

$$"\sin \theta t > nw/nt"$$

to the front portion of the optical path. Preferably, the optical element 10 may output therefrom the lights the front portion of the optical path in such a manner that the output lights contain the lights having an angle $\theta t$ satisfying the condition "$\sin \theta t > nw/nt$" as much as possible. By the way, in case
where the transparent medium w is the air, nw = 1 and thus the above condition provides

$$\sin \theta t > 1/nt.$$

On the other hand, the condition of the optical element 12 for selecting the optical path is set such that only the lights satisfying the condition

$$"\sin \theta s > nw/ns"$$

can be transmitted through the optical element 12. By the way, in case where the transparent medium w is the air, nw = 1 and thus the above condition provides

$$\sin \theta s > 1/ns.$$

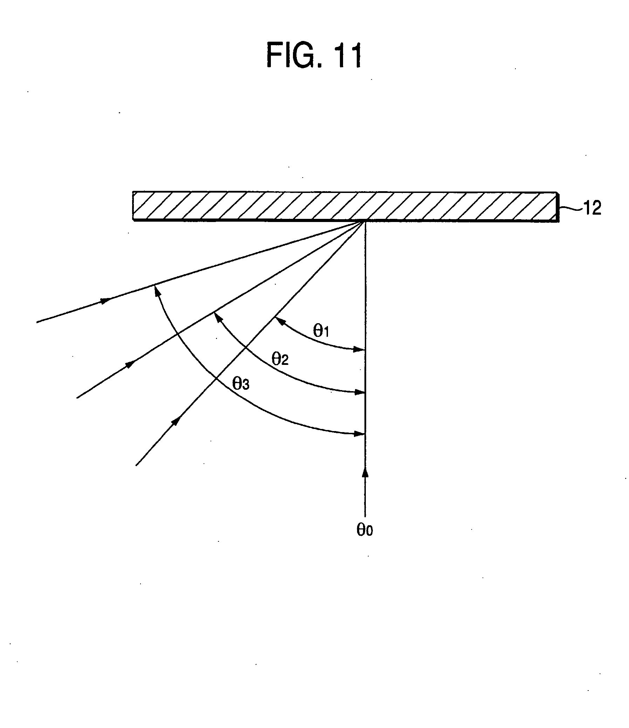

Next, description will be given below in detail of the properties of the optical element 12 for selecting the optical path with reference to Figs. 11 - 13.

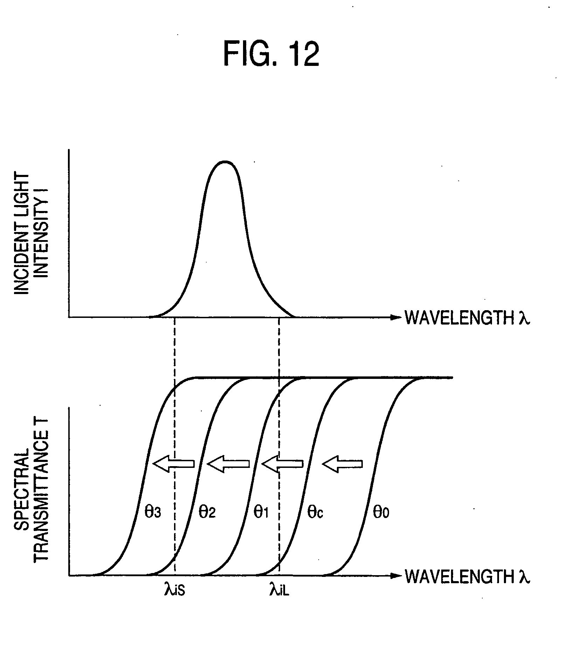

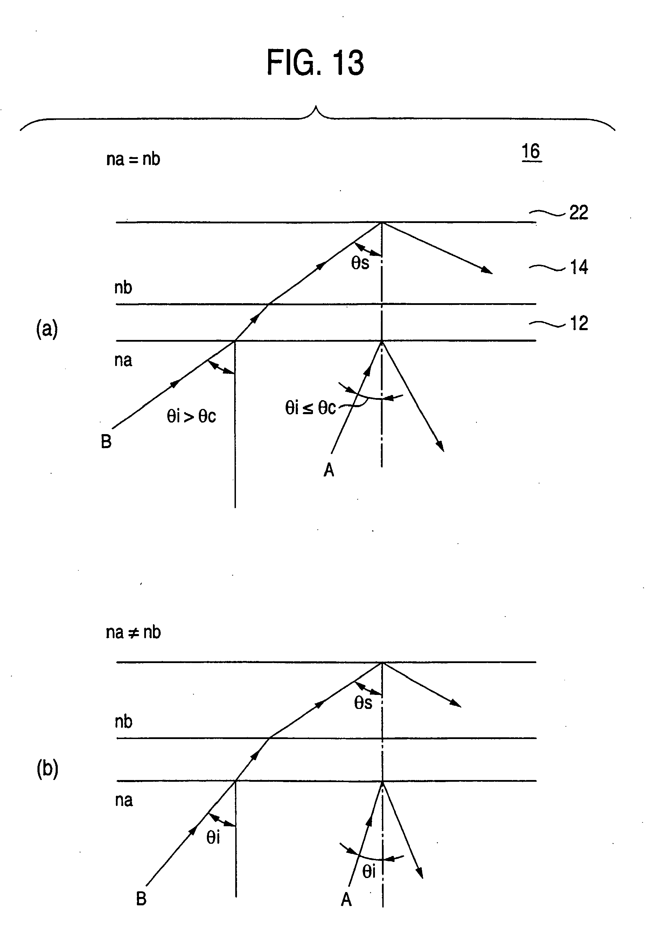

Fig. 11 shows the incident angles of the incident lights illuminated onto the optical element 12, Fig. 12 is a graphical representation of the spectral transmittances of the optical element 12 with respect to the wavelengths of the incident lights by incident angle, and Fig. 13 shows optical paths which are arranged inside and outside the optical element 12.
Firstly, as shown in Fig. 11, in case where the incident lights are illuminated onto the optical element 12 at their respective incident angles $\theta_0$, $\theta_1$, $\theta_2$ and $\theta_3$, as shown in Fig. 12, the spectral transmittance of the optical element 12 changes in such a manner as shown in Fig. 12. That is, when the incident angle $\theta_0$ (0 degree) is equal to or smaller than the total-reflection critical angle $\theta_c$, the spectral transmittance is substantially 0% with respect to the wavelength range $\lambda$ is - $\lambda_{iL}$ of the incident light, thereby providing a light shielding state (a state in which the incident lights are not transmitted through the optical element 12 but are reflected by the optical element 12). On the other hand, in case where the incident angle is larger than the total-reflection critical angle $\theta_c$, as the incident angle increases like $\theta_1$, $\theta_2$ and $\theta_3$,

the transmission characteristic of the spectral transmittance shifts to the short wavelength side, so that the quantity of the light to be transmitted increases. That is, as the incident angle of the incident light into the optical element 12 decreases with respect to the surface of the present optical element 12, the wavelength of the incident light to be reflected selectively shifts to the short wavelength side. Due to this, the lights of the incident lights having an incident angle component of $\theta_0$ are not allowed to pass through the optical element 12, but the lights respectively having larger incident angle components $\theta_1$, $\theta_2$ and $\theta_3$ than a specific angle are transmitted through the optical element 12 while the quantities of the lights increase sequentially in the above order. In view of this, in case where the spectral characteristic of the optical element 12 is designed such that only the incident light components having an incident angle larger than the total-reflection critical angle $\theta_c$ can be transmitted through the element 12, the incident light components not satisfying the total reflection condition are prevented against transmission through the optical element 12, but only the incident light components to be totally reflected can be selectively emitted from the optical element 12.

Now, description will be given below of the incident light optical paths when the total-reflection optical member 2 is structured using the optical element 12 designed such that only the incident light components having an incident angle larger than the total-reflection critical angle $\theta_c$ can be transmitted through the element 12, with reference to Fig. 13.

Fig. 13 (a) shows an optical path A in which a light introduced into the optical element 12 for selecting the optical path of an incident light is reflected by the optical element 12, and an optical path B in which a light introduced into the optical element 12 for selecting the optical path is transmitted through the optical element 12 and is totally reflected by the total reflection surface 22 serving as an interface between a transparent medium 14 and a transparent medium 16 respectively situated in the optical path front portion.

The optical path A provides a case where the incident angle $\theta_i$ of the incident light is equal to or smaller than the total-reflection critical angle $\theta_c$; and, in the optical path A, the optical element 12 does allow the light having such incident angle component to pass therethrough but reflects the light selectively by the surface thereof. Therefore, the light having such incident angle component equal to or smaller than the total-reflection critical angle $\theta_c$ is prevented from being transmitted to the front portion of the optical path by the optical element 12.

The optical path B provides a case where the incident angle $\theta_i$ of the incident light is larger than the total-reflection critical angle $\theta_c$; and, in the optical path B, the optical element 12 allows the light having such incident angle component to pass therethrough. Therefore, the light having an incident angle component larger than the total-reflection critical angle $\theta_c$ is transmitted through the optical element 12, is introduced into the transparent medium 14 and is totally reflected by the total reflection surface 22.

By the way, Fig. 13 (a) shows a case in which a refractive index na on the side where the incident light is introduced is equal to the refractive index nb of the transparent medium 14 as well as the incident angle $\theta_i$ of the incident light to the optical element 12 is equal to the incident angle $\theta_s$ onto the total reflection surface 22.

On the other hand, Fig. 13 (b) shows a case in which the refractive index na on the incident light introduction side is different from the refractive index nb of the transparent medium 14 as well as the incident angle $\theta_i$ of the incident light to the optical element 12 is different from the incident angle $\theta_s$ onto the total reflection surface 22. In this case, the optical element 12 is designed such that the incident angle $\theta_s$ of the light onto the total reflection surface 22 is larger than the total-reflection critical angle $\theta_c$.

By constructing the total-reflection optical member 2 using the above-structured optical element 12 for selecting the optical path, as shown by the arrow marks in Fig. 2, in case where a surface-shaped incident light composed of a collimated light or a diffused light introduced from inside or outside the total-reflection optical member 2 is introduced into the optical element 10 for changing the optical path of an incident light, the optical path is caused to shift from the illuminated position of the light by diffusion. And, in case where the lights with their optical paths changed reach the optical element 12 for selecting the optical path, only the incident lights having an incident angle component larger than the total-reflection critical angle $\theta_c$ of the total reflection surface 22 serving as an interface between the transparent medium 14 and transparent medium 16 are allowed to pass through the optical element 12, whereas the incident lights having the other incident angle components are selectively reflected toward the incident light introduction side by the surface of the optical element 12.

Therefore, of the lights illuminated onto the total-reflection optical member 2, only the lights to be reflected totally by the total reflection surface 22 are introduced to the front portions of their respective optical paths, and the thus introduced lights are reflected totally by the total reflection surface 22. That is, in the optical element 12 for selecting the optical path, substantially all of the transmitted lights to be emitted from the optical element 12 have incident angle components larger than the total-reflection critical angle of the total reflection surface situated more forwardly of the incident light optical paths than the optical element 12 for selecting the optical path, whereas the incident lights having the other incident angle components are selectively reflected by the optical element 12 and thus are not transmitted through the optical element 12. By the way, in the interior of a medium having a total reflection surface, substantially, light introduction, light storage, or light confinement does not occur.

Also, part of the lights reflected toward the incident light introduction side by the surface of the optical element 12 for selecting the optical path are reflected by the light incident side interface (reflecting layer) of the optical element 10 for changing the optical path and are illuminated again to the optical element 12 for selecting the optical path. In the case of the re-illuminated lights, the incident angle thereof increases over the total-reflection critical angle $\theta_c$; and, therefore, the present lights can be transmitted through the optical element 12 and thus can be introduced into the transparent medium 14.

Next, description will be given below of the optical coupler element 4.

The optical coupler element 4 is an element which can destroy the total reflection condition of the incident light on the total reflection surface, can couple the incident light and take out the thus optically coupled light, and can emit the coupled light to the front portion of the optical path of the incident light. The optical coupling element 4 includes optical path changing means for changing the optical path of the taken-out light, specific wavelength component absorbing means for absorbing a specific wavelength component, and light emitting means for exciting and emitting a light. Specifically, for example, there can be used means which are shown in the following articles (1) - (4). That is:

(1) means for changing the optical path of the light by refraction or means having this function.

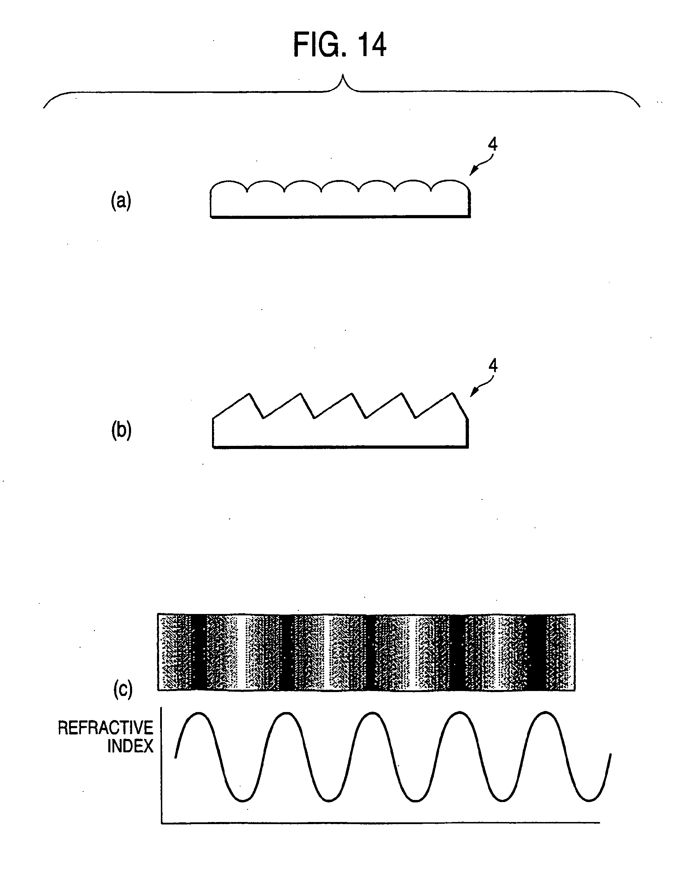

Means which is disposed adjacently to the total reflection 22 and is used to change the optical path of an output light taken out by refraction; for example, a lens array shown in Fig. 14 (a), a prism array shown in Fig. 14 (b), and a refractive index distributed lens member shown in Fig. 14 (c). According to these lens array, prism array and lens member, an output light taken out from the total reflection surface 22 of the total-reflection optical member 2 can be condensed or diffused and then can be emitted in different directions, so that the output light is allowed to have or lose a light emission directionability by a simple structure without lowering the intensity of the output light.

(2) A diffraction grating of a transmission type or means having the function of the same.

As a diffraction grating of a transmission type which allows the taken-out light to pass therethrough and also can change the emitting direction of the taken-out light by diffraction, similarly to the previously described case, there can be used a volume hologram shown in Fig. 3 (a), a diffraction grating of a relief type shown in Fig. 3 (b), a diffraction grating of a refractive index modulation type shown in Fig. 3 (c), and a diffraction grating of an amplitude modulation type. According to these transmission-type diffraction gratings, the emitting angle of the output light can be set accurately. Also, they can be mass produced according to, for example, a photopolymer method or an injection molding method, which makes it possible to reduce the cost of the optical device itself.

(3) A light diffusing member or a light scattering member, or means having the function of the same.

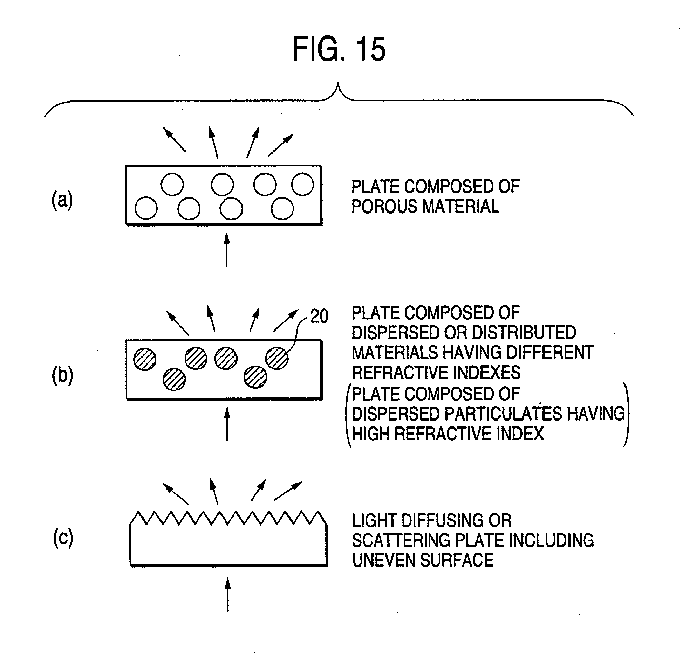

As a light diffusing member or a light scattering member which diffuses or scatters the taken-out light, there can be used a plate made of a porous material shown in Fig. 15 (a), a plate in which materials 20 having different refractive indexes such as minute particles having a high refractive index are dispersed or distributed, a light diffusing plate or a light scattering plate including an uneven (corrugated, or convexly and concavely formed) surface shown in Fig. 15 (c). According to the present light diffusing plate or light scattering plate, the output light can be dispersed in an arbitrary direction by diffusion or by scattering, which allows the output light to lose its light emission directionability.

(4) Means for absorbing an incident light or means having the function of the same.

As means for absorbing an incident light, there can be used a transmissive image film in which image data are recorded. In case where the specific wavelength component of the output light taken out from the total reflection surface 22 of the total-reflection optical member 2 is absorbed by the transmissive image film and the output light is then emitted from the transmissive image film, the shades of the output light can be displayed and a specific color can be developed. That is, the light can be displayed in the same manner as the images that are recorded in the transmission image film. Thanks to this, even in the incident lights of the same kind, there can be selectively obtained a plurality of emitted lights having different colors.

(5) Means for excitedly emitting a light or means having the function of the same.

As means which is excited by an incident light to thereby emit a light, there can be used fluorescent substances or photoluminescent substances. In this case, the present fluorescent substances or photoluminescent substances can be excited by the output light taken out from the total reflection surface 22 of the total-reflection optical member 2 to emit lights having specific colors. Also, in case where the specific colors are set as e.g. red, green and blue, these light emitting substances can be combined together according to the images to be displayed, thereby being able to display the images with full colors.

As has been described above, according to the above-structured optical device 100, since the incident lights from the surface-shaped light source as they are are introduced directly into the total-reflection optical member 2 with high efficiency without using a light introduction plate or a light waveguide passage, for example, when compared with a case in which the incident lights are introduced from the end-face side, the introduction port of the incident light can be made remarkably wide, thereby being able to enhance the coupling efficiency with the incident lights; and thus, even in case where the optical device 100 itself is designed as a thin structure, surface-shaped total reflection lights can be obtained with high efficiency free from the influence of the thin structure of the optical device 100. Due to this, the output lights taken out from the total-reflection optical member 2 can be emitted to the front portion of the optical paths thereof with high efficiency from the area where the optical coupler elements 4 are disposed. Thus, in the surface of the optical device 100 that is situated on the front sides of the optical paths, only the areas with the optical coupler elements 4 disposed therein are allowed to gleam and lights can be emitted in the same manner as images to be displayed from the optical device 100. That is, the images can be displayed only at the required positions. Also, according to the present structure, there can be prevented the lowered quantity of light in the local portion of the display screen caused by a cross talk which can occur when a light introduction plate or a light waveguide passage is used, so that the images can be displayed with uniform brightness over the entire surface of the display screen.

Also, since part of the incident lights reflected by the respective interfaces existing within the optical element 100 are re-illuminated to the front portions of the optical paths thereof due to their reflection by the interfaces, the output of the optical device 100 can also be increased easily. Further, because the total-reflection optical member 2 by itself does not generate transmission lights substantially, the light use efficiency of the optical device 100 can be enhanced. By the way, in case where the gas contact interface of the optical device 100 to be contacted with the air (which may also be inert gas) is formed as a total reflection surface, the structure of the optical device 100 can be simplified without separately providing a layer having such a refractive index as to cause total reflection.

By the way, in case where not only the optical coupler element 4 according to the present embodiment is formed of e.g. a fluorescent substance film in which images are recorded and also which is cut to a given size but also the light source uses a UV light for exciting fluorescent substances, simply by placing the fluorescent substance film at the desired position of the total reflection surface of the total-reflection optical member 2 at the time necessary for image display, the images can be displayed at the thus-placed position. Also, since no light is emitted from the area where the optical coupler element 4 is not disposed, a difference between the brightness of the displayed images and the brightness of the periphery thereof is large to thereby be able to emphasize the displayed images visually; that is, there can be provided a visual effect additionally. Further, because the fluorescent substance film may be placed only when the image display is necessary, the image display can be carried out when it is required; and, since a plurality of kinds of fluorescent substance films can be switched over to each other for image display, different images can be switchingly displayed with ease. In addition, by controlling the image display dynamically, there can be constructed an advertising signboard or an illuminated signboard which can attract the attention of people.

The above-described optical device not only can be used for image display but also can be used as a medium for displaying various kinds of information such as character information and figure information.

Next, description will be given below of a first modification of the first embodiment of the invention which uses, as an optical element for selecting the optical path of the incident light, a Bragg reflection filter instead of the above-mentioned light interference filter.

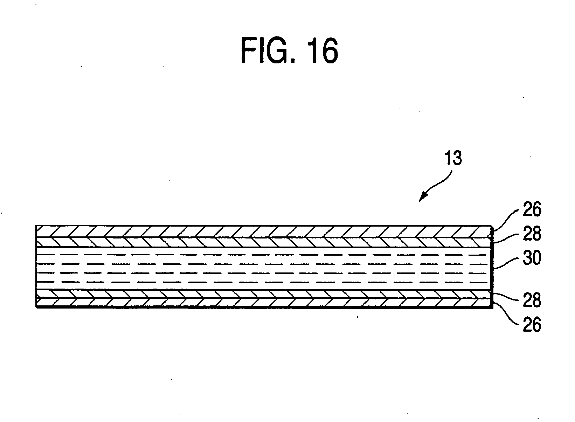

Fig. 16 shows an example in which an optical element 13 for selecting the optical path is composed of a liquid crystal film. In this example, the optical element 13 for selecting the optical path comprises a pair of transparent electrodes 26 made of ITO, a pair of orientation layers 28 respectively formed inside the two transparent electrodes 26, and a cholesteric liquid crystal layer 30 enclosed by the orientation layers 28.

Now, description will be given below of a filtering effect which can be provided by the cholesteric liquid crystal layer 30. In this cholesteric liquid crystal layer 30, cholesteric liquid crystal particles are oriented in parallel to the cholesteric liquid crystal layer 30 and provide a spiral structure with respect to the vertical direction of the layer 30.

Assuming that the normal light refractive index of the cholesteric liquid crystal layer 30 is expressed as no, the abnormal light refractive index thereof is expressed as ne, the birefringent index thereof is expressed as $\Delta$ n, and the average refractive index is expressed as n, the birefringent index $\Delta$ n can be expressed by the following equation (3).

$$\Delta \; n \; = \; ne \; - \; no \qquad (3)$$

Also, the average refractive index n can be expressed approximately by the following equation (4).

$$n \; = \; (ne \; + \; no) \; /2 \qquad (4)$$

Further, where the spiral pitch of the cholesteric liquid crystal layer 30 is expressed as P [nm], the cholesteric liquid crystal layer 30 shows a characteristic to reflect an incident light selectively according to the Bragg reflection principle. That is, in case where an incident light introduced to the cholesteric liquid crystal layer 30 at an incident angle $\theta$ [deg] is selectively reflected by the cholesteric liquid crystal layer 30, the center wavelength $\lambda$ ($\theta$) [nm] of the incident light can be expressed by the following equation (5).

$$\lambda(\theta) = \lambda(0) \cdot \cos[\sin^{-1}(\sin\theta/n)] \qquad (5)$$

In this case, it is assumed that the incident light is introduced from the air (refractive index = 1). Here, $\lambda(0)$ [nm] is a center wavelength when the incident angle is $\theta_0$, that is, when the incident light is introduced perpendicularly to the cholesteric liquid crystal layer 30, and it can be expressed by the following equation (6).

$$\lambda(0) = n \cdot P \qquad (6)$$

Also, a reflection wavelength width $\Delta\lambda$ [nm] canbeexpressed by the following equation (7).

$$\lambda = \Delta n \cdot P \qquad (7)$$

Therefore, in case where the cholesteric liquid crystal layer 30 is formed by controlling the physical property values of the cholesteric liquid crystal layer 30, that is, the normal light refractive index no, abnormal light refractive index ne and spiral pitch P of the cholesteric liquid crystal layer 30, there can be formed an optical filter having an arbitrary reflection center wavelength $\lambda(\theta)$ variable according to the incident angle $\theta$ and a desired reflection wavelength width $\Delta\lambda$. For example, the spiral pitch P can be adjusted according to a method in which two or more kinds of materials having different spiral pitches are mixed together to thereby adjust the spiral pitch P.

Further, in case where the wavelength range of an incident light to be introduced is wide, it is necessary to widen the selective reflection wavelength range of the cholesteric liquid crystal layer as well. In this case, by orienting liquid crystals in such a manner that the spiral pitches differ successively in the thickness direction, the reflection wavelength range can be widened. Also, by superimposing cholesteric liquid crystal layers having different selective reflection wavelength ranges on top of each other, the reflection wavelength range of the cholesteric liquid crystal layer can also be widened. The thus formed cholesteric liquid crystal layer can be used as a composing part of the optical element for selecting the optical path according to the invention.

By the way, the cholesteric liquid crystal layer 30 can be manufactured in the following manner.

That is, a polyimide orientation film is applied and dried on a support material used to form a cholesteric liquid crystal film, and the polyimide orientation film is surface treated by rubbing, whereby a polyimide orientation film is formed. A mixture composed of a low molecule cholesteric liquid crystal or a nematic liquid crystal mixed with a chiral agent for developing a twist, a high molecular monomer, and a photopolymerization start agent are applied on top of the polyimide orientation film using an adjusting solution mixed with an organic solvent; and, after then, the polyimide orientation film is oriented at a proper temperature. Next, ultraviolet rays are exposed to the necessary portions of the polyimide orientation film to thereby cause photopolymerization in the exposed portions, whereas the unnecessary portions of the polyimide orientation film are removed by development. Finally, the polyimide orientation film is baked at high temperatures and is thereby stabilized.

To control the twist direction and reflection/incident angles, the respective densities of the cholesteric liquid crystal and chiral agent may be changed properly.

Also, the cholesteric liquid crystal film can also be formed using a high molecular cholesteric liquid crystal. In this case, similarly to the above-mentioned case, a high molecular cholesteric liquid crystal and a photopolymerization start agent are applied on top of a polyimide orientation film using an adjusting solution mixed with an organic solvent; and, after then, the polyimide orientation film is oriented at a proper temperature. Next, ultraviolet rays are exposed to the necessary portions of the polyimide orientation film to thereby cause photopolymerization in the exposed portions. The reflection/incident angles can be controlled by selecting properly the temperature for orientation and can be stabilized by photopolymerization.

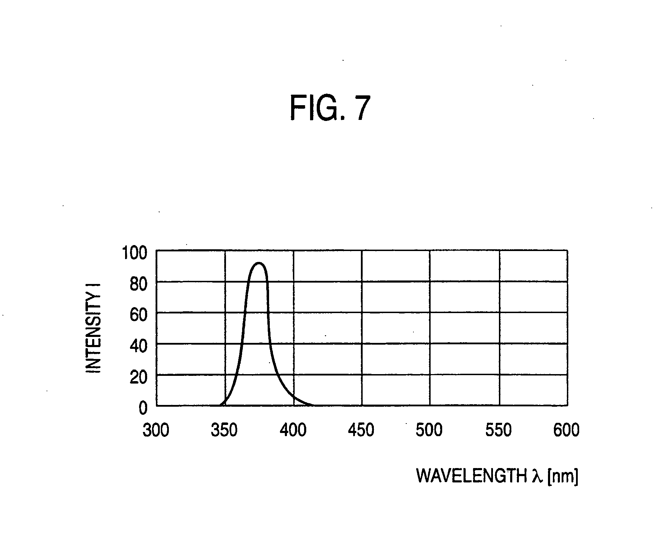

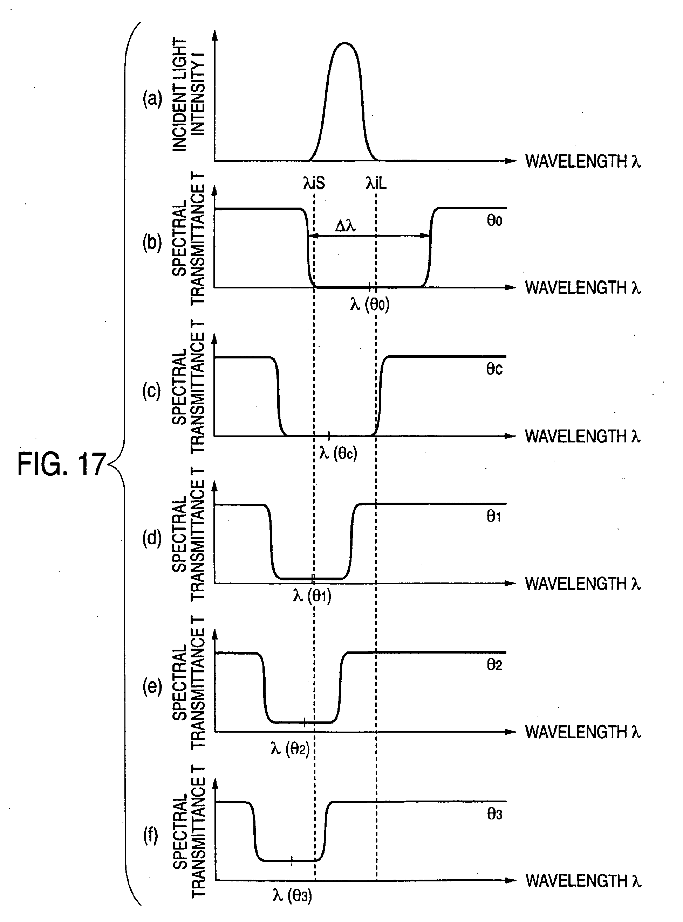

Here, Fig. 17 shows the spectral transmittances that are provided by the thus-structured optical element 13 for selecting the optical path. In this case, the cholesteric liquid crystal layer is composed of a combination of a left-twisted cholesteric liquid crystal layer and a right-twisted cholesteric liquid crystal layer, in which a total-polarization light component is reflected in the reflection wavelength range thereof. In the case of the incident angle being $\theta_0$ (see Fig. 7) which is equal to or smaller than the total-reflection critical angle $\theta_c$, the spectral transmittance is substantially 0% with respect to the wavelength range $\lambda_{iS} - \lambda_{iL}$ and thus the incident light is not allowed to pass through the cholesteric liquid crystal layer. On the other hand, in case where the incident angle is larger than the total-reflection critical angle $\theta c$, as the incident angle increases in the order of $\theta_1$, $\theta_2$, and $\theta_3$, the transmission characteristic of the spectral transmittance shi fts to the short wavelength side so that the quantity of the transmission light increases. That is, the lights of the incident lights having an incident angle component of $\theta_0$ are not allowed to pass through the cholesteric liquid crystal layer, whereas the lights respectively having incident angle components $\theta_1$, $\theta_2$, and $\theta_3$ are allowed to pass through the cholesteric liquid crystal layer in such a manner that the respective transmission light quantities increase in the order of $\theta_1$, $\theta_2$, and $\theta_3$. In view of this, in case where the spectral characteristic of the optical element 12 is designed such that only the incident light components having an incident angle larger than the total-reflection critical angle $\theta c$ on given interfaces are allowed to pass through the cholesteric liquid crystal layer, the incident light components not satisfying the total reflection condition can be removed selectively and only the incident light components to be totally reflected can be emitted from the optical element 12.

According to the present structure, there can be obtained a similar operation effect to the previously-described structure using a light interference filter and, at the same time, the optical element 13 for selecting the optical path of the incident light can be produced at a lower cost.

Also, in case where the spiral structure of the cholesteric liquid crystal layer 30 is twisted to the right, the right-circle polarized component light is reflected, whereas the left-circle polarized component light along the spiral is allowed to pass through the cholesteric liquid crystal layer 30. On the other hand, in case where the spiral structure of the cholesteric liquid crystal layer 30 is twisted to the left, the left-circle polarized component light is reflected, whereas the right-circle polarized component light is allowed to pass through the cholesteric liquid crystal layer 30. Therefore, in order to reflect all of the polarized light components of the lights by the cholesteric liquid crystal layer 30, that is, in order to prevent all of the polarized light components from to passing through the cholesteric liquid crystal layer 30, the cholesteric liquid crystal layer 30 may be structured such that the left-twisted (or right-twisted) cholesteric layer and right-twisted (or left-twisted) cholesteric layer are superimposed sequentially on top of each other: that is, according to this structure, all of the polarized lights can be reflected by the cholesteric liquid crystal layer 30.

As an optical element having a Bragg reflection function, besides the above-mentioned cholesteric liquid crystal, there can be used a volume hologram effectively. The volume hologram has a Bragg reflection function due to the grating-shaped refractive index distribution formed within a film and reflects a light having a specific wavelength. Also, in case where the incident angle increases, the reflection wavelength of the volume hologram shifts to the short wavelength side, so that the volume hologram can function as an optical path selecting film. To form a volume hologram, a photographic material for a hologram, a photopolymer of a phase separation type, an HPDLC (holographic polymer dispersed liquid crystal), or a photolithography material may be used as a photosensitive material, and the photosensitive material may be treated by multi-luminous-flux interference light exposure.

Next, description will be given below of a second modification of the present embodiment in which the total-reflection optical member 2 can be realized with a further simplified inexpensive structure without using the above-mentioned light interference filter or Bragg reflection filter.

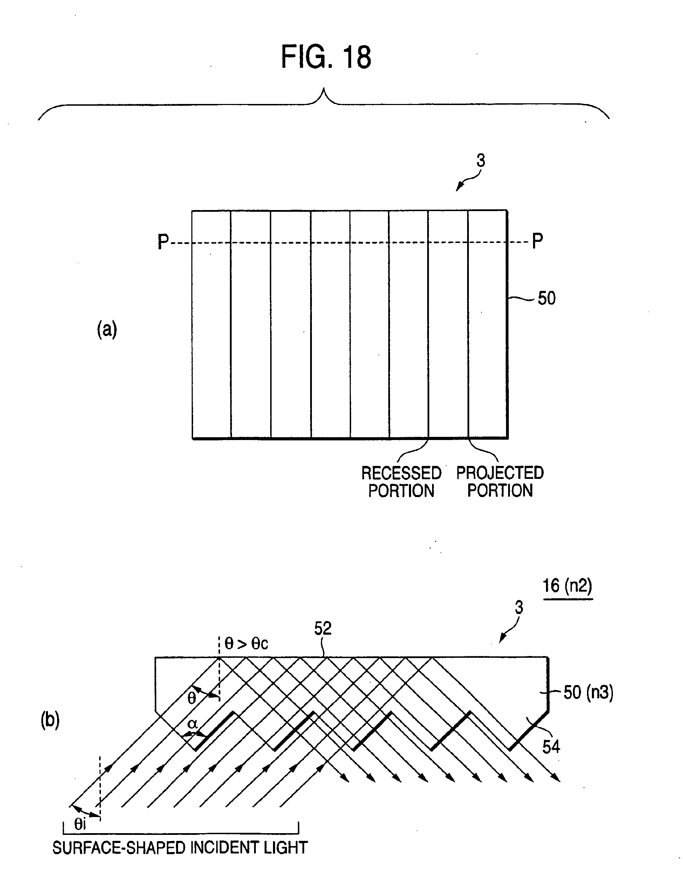

In the present modification, a total-reflection optical member 3 is formed using a prism. Fig. 18 shows the example of the structure of the total-reflection optical member 3 according to the present modification. The total-reflection optical member 3 according to the present modification is composed of a microprism array 50 which includes an uneven surface on the incident light introduction side. Fig. 18 (a) is a plan view of the microprism array 50, when it is viewed from the entering surface side of the incident light, and Fig. 18 (b) is a section view taken along the broken line P-P shown in Fig. 18 (a).

The microprism array 50 is formed as a plane plate. The upper surface of the microprism array 50 is formed as a smooth total-reflection surface 52 and, on the other hand, the lower surface of the microprism array 50 is composed of a plurality of prisms 54 arranged in parallel to each other, while the section of each of the prisms 54 has an uneven or angular shape.

As a material for the microprism array 50, there can be used glass or resin. From the viewpoint of mass production, preferably, resin may be used. As the resin for this purpose, acrylic resin, epoxy resin, polyester resin, polycarbonate resin, styrene resin, and vinyl chloride resin are optically preferred. Further, the resin material includes a light-setting type material, a photo-melting type material, a thermo-setting type material and a thermoplastic type material; and, they can be selected properly according to cases.

As a method for manufacturing the microprism array 50, from the viewpoint of productivity, preferably, there may be used a casting method using a die, a heat press molding method, an injection molding method, a printing method, and a photographic method. Specifically, the microprism array 50 can be molded by pressing thermoplastic resin using a die having a microprism shape. Also, the microprism array 50 can also be molded in the following manner: that is, light-setting resin or thermosetting resin may be loaded into a die, after then, the resin may be hardened by light or by heat, and, finally, the thus-hardened resin may be removed from the die.

In the case of the photolithographic method, ultraviolet rays (or visible rays) are properly applied to light-melting resin or light-setting resin through a patterned light-shielding mask to thereby melt and develop the exposed portion or unexposed portion of the resin. A microprism having a desired shape can be obtained by selecting the resin material and by adjusting the distribution of the light exposure quantity of the resin. Also, depending on the resin material, after developed, the resin may be baked at high temperatures; that is, due to the surface tension of the resin when it is softened by heat, there can be obtained a microprism 50 having a desired shape.

Also, the incident light is a surface-shaped light having an incident angle existing within a specific incident angle range and, as shown in Fig. 18 (b), the incident light is introduced into the total-reflection optical member 3 at an incident angle $\theta_i$.

According to the total-reflection optical member 3 of the present embodiment, in case where the peripheral medium of the microprism array 50 is the air (a refractive index n2 = 1) and the microprism array 50 is composed of transparent resin (a refractive index n3 = 1.5), the total-reflection critical angle $\theta_c$ of the total reflection surface 52 can be found similarly according to the above-mentioned equation (1), specifically, 42 [deg].

Accordingly, as an example for setting the incident angle $\theta$ with respect to the total reflection surface 52 such that $\theta \geq \theta_c$, the vertex $\alpha$ of the prism is set at substantially 90 [deg] and the right and left opening angles thereof are set at substantially 45 [deg]. In this example, in case where an incident light is introduced from outside the prism, the incident angle $\theta_i$ of the incident light is substantially 45 [deg]. Under this condition, an optical vignetting phenomenon is substantially avoided and thus the incident light can be totally reflected by the total reflection surface 52 with high efficiency. By the way, the vertex $\alpha$ of the prism is not limited to this value.

As described above, using the microprism array 50 which can be mass produced easily and at a low cost, the incident lights illuminated in a surface shape are introduced and substantially all of the thus introduced incident lights can be totally reflected.

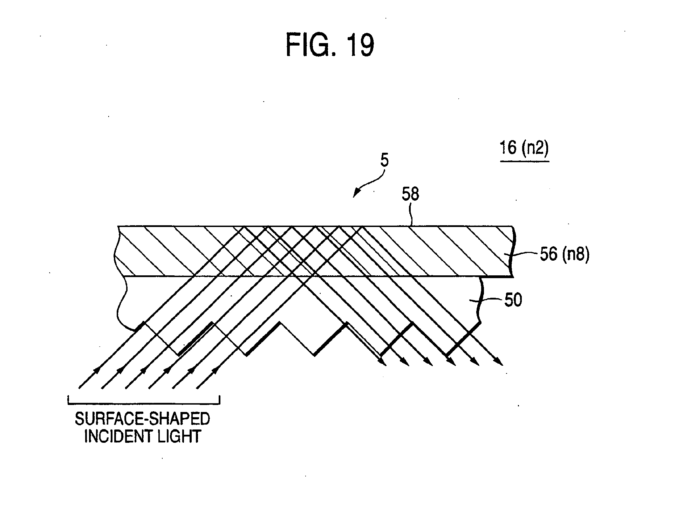

By the way, there can also be employed a structure in which a transparent medium 56 formed of glass or resin is disposed in the optical path front portion of the microprism array 50. Fig. 19 shows the section structure of a total-reflection optical member 5 employed in the present structure.

According to this structure, surface-shaped incident lights are illuminated onto the microprism array 50, and incident lights having given incident angle components set according to the vertex $\alpha$ of the prism are introduced into a transparent medium 56. And, the thus introduced incident lights are totally reflected by the total reflection surface 58 of the transparent medium 56 with high efficiency.

In this manner, by introducing the illuminated surface-shaped incident lights using the microprism array 50 which can be mass produced easily and at a low cost, substantially all of the thus introduced incident lights canbe totally reflected by the interface 58 of the transparent medium 56.

Next, description will be given below of a second embodiment of an optical device according to the invention.

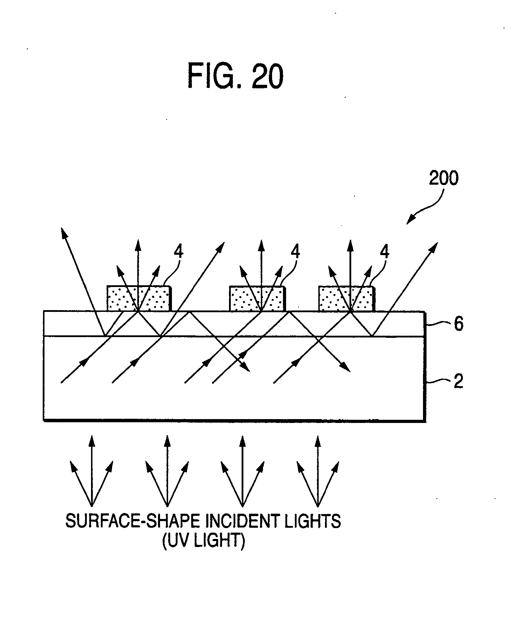

Here, Fig. 20 shows the structure of the second embodiment of an optical device according to the invention. An optical device 200 according to the second embodiment is a multilayer structure device, in which, from the introduction side of UV lights used as incident lights, a total-reflection optical member 2, an optical filter 6 for reflecting visible lights and transmitting the UV lights therethrough, and optical coupler elements 4 disposed selectively and including fluorescent substances are superimposed on top of each other in this order.

According to this structure, in case where the surface-shaped incident lights are illuminated onto the total-reflection optical member 2 from a light source (black light) for emitting the UV lights, the incident lights are introduced into the total-reflection optical member 2. In the areas of the optical device 200 where the optical coupler elements 4 are disposed, while the total reflection condition of the total reflection surface is destroyed, the incident lights transmitted through the optical filter 6 are taken out from the optical filter 6 to excite the fluorescent substances of the optical coupler elements 4 and thus cause them to emit their respective lights. In this case, the lights, which are emitted from the fluorescent substances and are directed toward the introduction side of the incident lights, are reflected to the front side of the optical paths thereof by the optical filter 6. On the other hand, in the areas of the optical device 200 where the optical coupler elements 4 are not disposed, the incident lights introduced into the total-reflection optical member 2 are totally reflected by the total reflection surface on the optical path front side of the optical filter 6. As a result of this, with the use efficiency of the excitedly emitted lights enhanced, the excitedly emitted lights can be used to display images, which makes it possible to display the images with enhanced brightness.

Here, as the wavelengths of the lights illuminated from the light source, there can be used wavelengths in the range of 350 - 400 nm and, as the fluorescent substances, there can be used fluorescent substances which can develop visible lights such as R (red), G (green) and B (blue), so that the images can be displayed in full colors. Also, alternatively, as the light illuminated from the light source may be a light having a wavelength for developing a blue color and, as the fluorescent substances, there may be used G (green) and R (red) fluorescent substances which can be excited by the blue light of the light source to thereby emit their respective color lights. That is, the combination of these components is not limited to the above-mentioned example. Also, the optical filter 6 can also use the previously-described films, that is, a multilayer interference film such as a dielectric multilayer film, and a cholesteric film using a cholesteric liquid crystal.

Next, description will be given below of an embodiment of a display apparatus according to the invention.

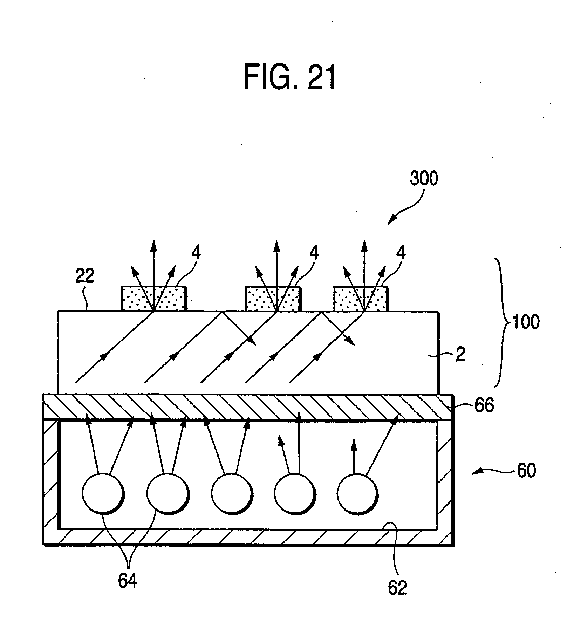

Fig. 21 shows the structure of a display apparatus according to the invention. A display apparatus 300 according to the present embodiment is structured such that a plane light source 60 is disposed on the incident light introduction side of the above-mentioned optical device 100 (which may also be the optical device 200 using a UV light source).

The plane light source 60 is structured such that light emitting members 64 such as fluorescent lamps are arranged in two or more rows in the interior of a light source box with a diffusive reflection element 62 disposed on the inner surface thereof, and a diffusion plate 66 is disposed in the optical path front portions of the light emitting members 64. Lights emitted from the plurality of light emitting members 64 are illuminated onto the diffusion plate 66 and, on the other hand, the emitted lights illuminated onto the back surface side are reflected by the diffusive reflection element and are then illuminated onto the diffusion plate 66. The optical device 100 is disposed in the optical path front portion of the diffusion plate 66, and the emitted surface-shaped lights are introduced into the optical device 100. Thanks to this, the surface-shaped lights are, as they are surface shaped, are introduced into the optical device 100 through the diffusion plate 66.

The surface-shaped lights emitted from the plane light source 60 are introduced into the optical device 100 in this manner, and the lights are emitted from the areas of the optical device 100 where the optical coupler elements 4 are disposed. On the other hand, in the areas of the optical device 100 where the optical coupler elements 4 are not disposed, the incident lights introduced into the optical device 100 are totally reflected by the total reflection surface of the total-reflection optical member 2 and are thus prevented from being emitted to the optical path front portion.

According to the present structure of the display apparatus 300, in case where the optical coupler elements 4 are disposed only in the portions necessary for image display, that is, only in the image output portions, the lights from the plane light source 60 can be prevented from being emitted from the other portions than the image output portions of the display apparatus 300. Thanks to this, necessary images can be displayed with high efficiency in arbitrary positions without degrading the quality of the images displayed. And, in case where the optical coupler elements 4 are composed of transmissive image films, by bonding the transmissive image films with desired imaged recorded to the arbitrary positions of the total-reflection optical member 2, the images can be displayed easily only at the film-bonded positions.

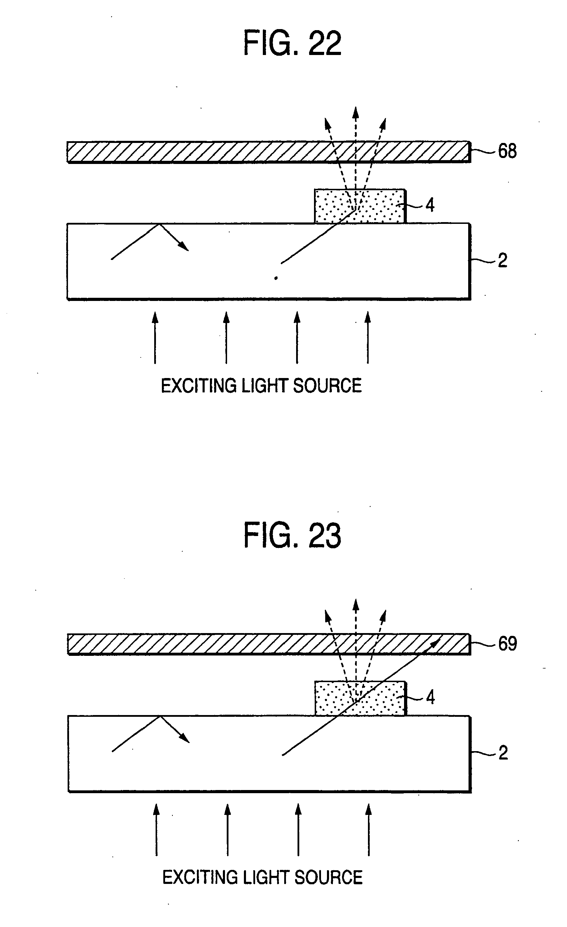

Also, as shown in Fig. 22, there can also be employed a structure in which an optical filter 68 for absorbing lights having wavelengths in the light emission wavelength range of the light source is disposed in the optical path front portion of the optical coupler element 4 of the display apparatus 300.

According to this structure, in case where the light emission wavelength of the light source 60 corresponds to a visible light range, by disposing an ND filter (transmittance is substantially 20 - 70%) for absorbing a visible light on the display side (the observer's side), high contrast can be obtained even in a light place, thereby being able to carry out a high-quality image display. Also, in the optical coupler element 4, there may be disposed fluorescent substances which can be excited by the lights having the light emission wavelength of the light source 60; and, in this case, similarly to the above, since part of the fluorescent lights are transmitted by the optical filter 68, whereas the other light components including the excitedly emitted lights are absorbed, it is possible to carry out a high-contract image display.

Further, as shown in Fig. 23, there can also be employed a structure in which fluorescent substances to be excited by the light of the light emission wavelength of the light source are disposed in the optical coupler element 4 and, in the optical front portion of the optical coupler element 4, there is disposed an optical filter 69 for shielding the excitedly emitted lights of the fluorescent substances. According to this structure, when a UV light source is used, emission of UV lights to the display side (the observer's side) can be prevented.

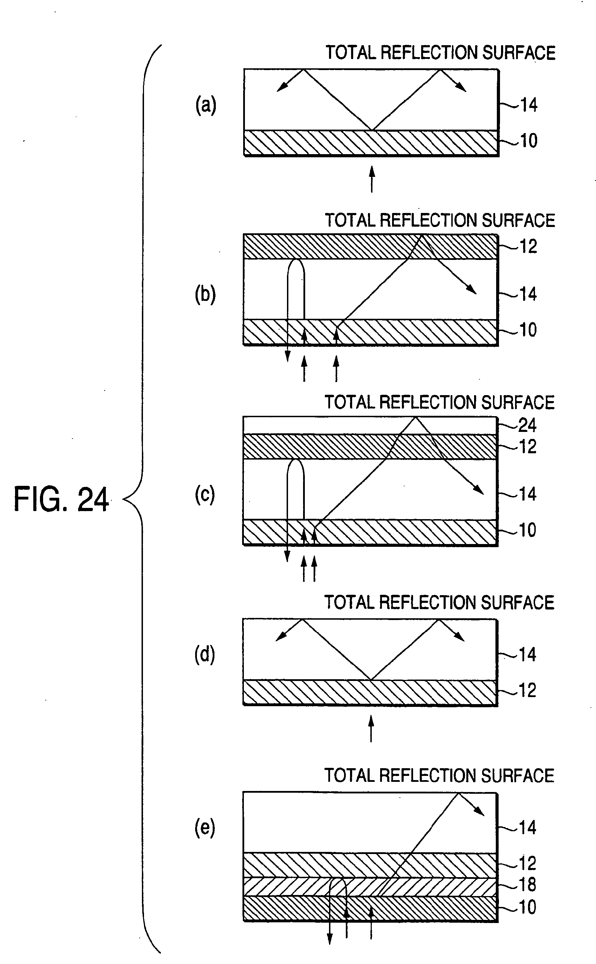

Here, description will be given below simply of the other examples of the structure of the total-reflection optical member 2 used in the above-mentioned respective embodiments with reference to Fig. 24.

Firstly, a total-reflection optical member shown in Fig. 24 (a) has a structure in which, from the introduction side of an incident light, an optical element 10 for changing the optical path of the incident light, and a transparent medium 14 including a total reflection surface are superimposed in this order. In the present total-reflection optical member, the optical element 10 for changing the optical path is designed such that the incident light is totally reflected by the total reflection surface 22 in the optical path front portion of the transparent medium 14.

According to the present total-reflection optical member, in case where the incident light is illuminated, the optical path of the light having an incident angle component to be totally reflected by the total reflection surface of the transparent medium 14 is changed. The transmission light with its optical path changed is totally reflected by the total reflection surface 22.

Next, a total-reflection optical member shown in Fig. 24 (b) has a structure in which, from the introduction side of incident lights, an optical element 10 for changing the optical paths of the incident lights, and a transparent medium 14, and an optical element 12 including a total reflection surface for selecting the optical path are superimposed in this order. In the present total-reflection optical member, the optical element 10 for changing the optical path is designed such that the incident lights are totally reflected by the total reflection surface in the optical path front portion of the optical element 12 for selecting the optical path.

According to the present total-reflection optical member, in case where the incident lights are illuminated, the optical paths of the lights are changed by the optical element 10 for changing the optical path. Due to this, the lights, which now have an incident angle component to be totally reflected by the total reflection surface, are introduced into the optical element 12 for selecting the optical path and are then totally reflected by the total reflection surface. On the other hand, the lights having the other incident angle components are not introduced into the optical element 12 for selecting the optical path but are selectively reflected, and are thus returned to the incident light introduction side.

Further, a total-reflection optical member shown in Fig. 24 (c) has a structure in which a medium 24 having a refractive index lower than the refractive index of a transparent medium 14 is disposed in the optical path front portion of the total-reflection optical member shown in Fig. 24 (b). In this case, an optical element 12 for selecting the optical path is designed such that the incident lights are totally reflected by the total reflection surface in the optical path front portion of the medium 24.

According to the present total-reflection optical member, in case where the incident lights are introduced through the optical element 10 for changing the optical path and transparent medium 14, the incident lights introduced into the optical element 12 for selecting the optical path are totally reflected by the total reflection surface in the optical path front portion of the transparent medium 24. On the other hand, the lights having the other incident angle components are not introduced into the optical element 12 for selecting the optical path but are selectively reflected, and are thus returned to the incident light introduction side.

Next, a total-reflection optical member shown in Fig. 24 (d) has a structure in which, from the introduction side of an incident light, an optical element 12 for selecting the optical path of the incident light, and a transparent medium 14 including a total reflection surface are superimposed in this order. In the present total-reflection optical member, the optical element 12 for selecting the optical path is designed such that the incident light is totally reflected by the total reflection surface in the optical path front portion of the transparent medium 14.

According to the present total-reflection optical member, in case where the incident lights are introduced, only the lights having incident angle components to be totally reflected by the total reflection surface of the transparent medium 14 are transmitted through the optical element 12. That is, the thus transmitted lights are totally reflected by the total reflection surface. On the other hand, the incident light components not satisfying the total reflection condition are selectively reflected by the optical element 12 for selecting the optical path and thus are substantially prevented from passing through the total-reflection optical member.

Next, a total-reflection optical member shown in Fig. 24 (e) has a structure in which, from the introduction side of an incident light, an optical element 10 for changing the optical path of the incident light, an optical connection medium 18 serving as an optical adhesive layer, an optical element 12 for selecting the optical path of the incident light, and a transparent medium 14 are superimposed in this order. According to the present total-reflection optical member, in case where incident lights are illuminated, the optical paths of some of the incident lights are changed by the optical element 10 for changing the optical path into incident light components having incident angle components to be totally reflected by the total reflection surface of the transparent medium 14. Thus, the incident light components with their optical paths changed are totally reflected by the total reflection surface. On the other hand, the incident light components not satisfying the total reflection condition are selectively reflected by the optical element 12 for selecting the optical path and thus are substantially prevented from passing through the total-reflection optical member.

Even the total-reflection optical members having the above structures can also be applied to the total-reflection optical members according to the previously described embodiments of the invention and they can provide similar operation effects. By the way, the layer structure of the total-reflection optical member is not limited to a specific layer structure, provided that it has a function to meet the above-mentioned gist of the invention.

[INDUSTRIAL APPLICABILITY]

According to the invention, there is provided an optical device formed in a plane shape and comprising: a total-reflection optical member including, in the other surface thereof situated on the optical path front portion side, a total reflection surface so formed as to totally reflect at least part of surface-shaped incident lights introduced from one surface of the total-reflection optical member to thereby substantially prevent the incident lights from being emitted to the optical path front portion; and, optical coupler elements disposed adjacently to each other at the desired positions of the total reflection surface of the total-reflection optical member according to images to be displayed in such a manner that they can destroy the total reflection condition of the incident lights in the total reflection surface of the total-reflection optical member to thereby be able to couple the incident lights and take out the incident lights from the total reflection surface. Thanks to this structure, at least part of the introduced surface-shaped incident lights are totally reflected by the total reflection surface of the total-reflection optical member and are thus returned to the incident light introduction side of the optical device, whereby the incident lights introduced into the optical device are substantially prevented from being emitted to the optical path front portions of the incident lights. On the other hand, in the areas of the optical device where the optical coupler elements are disposed, with the total reflection condition of the total-reflection optical destroyed, the incident lights are coupled to the optical coupler elements and are thus emitted to the optical path front portion of the optical device from the total reflection surface. This makes it possible to construct an optical device which can emit the incident lights to the optical path front portion only from the areas of the optical device where the optical coupler elements are disposed.

Therefore, there can be provided an optical device which not only can introduce the surface-shaped incident lights directly as they are surface shaped to thereby be able to emit the lights with enhanced energy efficiency but also can set the mounting positions of the optical coupler elements in arbitrary positions to thereby be able to display desired images at the arbitrary positions of the total-reflection optical member with high quality.

Also, according to the invention, there is provided a display apparatus, comprising: the above-mentioned optical device; and, a plane light source disposed on the incident light introduction side of the optical device, wherein the lights from the plane light source are introduced into the optical device and the lights taken out from the total-reflection member by the optical coupler elements are emitted from the optical device to display images, whereby the surface-shaped lights from the plane light source can be introduced directly into the optical device with the optical coupler elements disposed therein and, while the energy efficiency of the display apparatus is enhanced, desired images can be displayed at arbitrary positions with high quality.

**Claims**

1. A planar optical device (100), comprising;

   a total-reflection optical member (2) having a total reflection surface (22) at a side opposite to an incident-light introduction side thereof;
   a light source that illuminates the incident-slight introduction side of the total-reflection optical member (2), wherein the total-reflection optical member (2) has the property that at least part of the incident light introduced into the total-reflection optical member (2) is totally reflected at the total reflection surface (22) of the total-reflection optical member (2) and that the incident light is substantially not transmitted through the total reflection surface (22); and
   optical coupler elements (4) disposed adjacently to each other at desired positions on the total reflection surface (22) of said total-reflection optical member (2) according to images to be displayed, wherein the optical coupler elements (4) destroy the total reflection condition of the incident light on the total reflection surface (22) of the total-reflection optical member (2) so as to couple the incident light and allow the transmission of the incident light through the total reflection surface (22);

   wherein the total-reflection optical member (2) comprises, disposed therein between the incident-light introduction side and the total reflection surface (22), an optical element layer (12, 13) which selects a light path, such that:

   light introduced into the total-reflectipn optical member (2) through the incident-light introduction side is then incident on the optical layer (12, 13) which selects the light path thereof, and
   all components of the light incident on the optical layer (12, 13) that have an angle larger then a total reflection critical angle of the total reflection surface (22) are transmitted through the optical layer (12, 13) and are incident on the total reflection surface (22) and all components of the light incident on the optical element (12, 13) having an angle less than a total reflection critical angle of the total reflection surface (22) are not transmitted through the optical layer (12, 13) and are thus not incident on the total refection surface (22).

2. An optical device as claimed in claim 1, wherein the device additionally comprises a further optical layer (10), disposed within the total-reflection optical member (2) between the incident-light introduction side and the total reflection surface (22), which changes a light path of light incident on said further optical layer (12, 13) through the incident-light introduction side and transmitted through the said further optical layer (10) to the optical element layer (12, 13) which selects a light path.

3. The optical device as set forth in claim 1 or claim 2, wherein each of said optical coupler elements (4) includes an optical path changing unit for changing the optical path of the light taken out by said optical coupler element

4. The optical device as set forth in claim 3, wherein said optical path changing unit changes the optical path of said taken-out light by refraction.

5. The optical device as set forth in claim 4, wherein said optical path changing unit includes any one of a lens array, a prism array, and a refractive index distributed lens member.

6. The optical device as set forth in claim 3, wherein said optical path changing unit changes the optical path of said taken-out light by diffraction.

7. The optical device as set forth in claim 6, wherein said optical path changing unit includes any one of a volume hologram, a diffraction grating of a phase modulation type and a diffraction grating of an amplitude modulation type.

8. The optical device as set forth in claim 3, wherein said optical path changing unit changes the optical path of said taken-out light by light diffusion or by light scattering.

9. The optical device as set forth in claim 8, wherein said optical path changing unit includes any one of a porous member, a different refractive dispersing member or distributed member, and a light diffusing or scattering member including a surface formed in an uneven shape.

10. The optical device as set forth in claim 1 or claim 2, wherein each of said optical coupler elements (4) includes specific wavelength component absorbing unit for absorbing and emitting the specific wavelength light component of said taken-out light.

11. The optical device as set forth in claim 1 or claim 2, wherein each of said optical coupler elements (4) includes light emitting unit excited by-receiving said take-out light to thereby emit light.

12. The optical device as set forth in any preceding claim, wherein a reflection layer for introducing said incident lights reflected by said total-reflection optical member (2) and returned to an incident light introduction side of said optical device again to said optical device is disposed on an incident light introduction side of said total-reflection optical member (2).

13. A display apparatus, comprising:

an planar optical device (100) as claimed in any preceding claim;
wherein the light source (60) is disposed on the incident light introduction side of said optical device,

wherein lights from said plane light source (60) are introduced into said optical device (100) and the lights taken out from said total-reflection optical member (2) by said optical coupler element (4) are emitted to thereby display images.

14. The display apparatus as set forth in claim 13, wherein said optical coupler element (4) is a transmissive image film with images recorded therein.

15. The display apparatus as set forth in claim 13, wherein each of said optical coupler elements (4) includes fluorescent substances and said plane light source emits lights each containing such a wavelength as to excite said fluorescent substances.

16. The display apparatus as set forth in any of claims 13 to 15, wherein, in the optical path front portions of said optical coupler elements (4), an optical filter (69) for absorbing a light having a light emitting wavelength range is disposed.

17. The display apparatus as set forth in claim 15, wherein, in the optical path front portions of said optical coupler elements (4), an optical filter (69) for shielding excitation light is disposed.

18. The display apparatus as set forth in claim 15, wherein between the total reflection surface (22) of said total-reflection optical member (2) and said optical coupler elements (4), an optical filter for reflecting an emission wavelength components of said fluorescent substances and also for allowing transmission of the wavelength components of said incident lights.

19. The display apparatus as set forth in claim 18, wherein said optical filter is a light interference filter including a dielectric multilayer film

20. The display apparatus as set forth in claim 18, wherein said optical filter is a Bragg reflection filter including a cholesteric film.

21. The display apparatus as set forth in any one of claims 15 to 20, wherein said wavelengths of said incident lights are in the range of 350 nm - 400 nm.

**22.** The display apparatus as set forth in any one of claims 15 to 21, wherein said fluorescent substances emit visible lights.

**23.** The display apparatus as set forth in claim 22, wherein said fluorescent substances include light emitting substances for emitting red, green and blue lights combined together according to the images to be displayed.

**Patentansprüche**

**1.** Planare optische Vorrichtung (100), die folgendes aufweist:

ein optisches Totalreflexionselement (2) mit einer Totalreflexionsoberfläche (22) auf einer Seite gegenüber seiner Einfallslichteinführungsseite;
eine Lichtquelle, die die Einfallslichteinführungsseite des optischen Totalreflexionselements (2) beleuchtet, wobei das optische Totalreflexionselement (2) die Eigenschaft hat, dass wenigstens ein Teil des in das optische Totalreflexionselement (2) eingeführten Einfallslichts an der Totalreflexionsoberfläche (22) des optischen Totalreflexionselements (2) total reflektiert wird und dass das Einfallslicht im Wesentlichen nicht durch die Totalreflexionsoberfläche (22) transmittiert wird; und
optische Kopplerelemente (4), die benachbart zueinander bei gewünschten Positionen auf der Totalreflexionsoberfläche (22) des optischen Totalreflexionselements (2) gemäß anzuzeigenden Bildern angeordnet sind, wobei die optischen Kopplerelemente (4) den Totalreflexionszustand des Einfallslichts auf der Totalreflexionsoberfläche (22) des optischen Totalreflexionselements (2) zerstören, um das Einfallslicht zu koppeln und die Transmission des Einfallslichts durch die Totalreflexionsoberfläche (22) zuzulassen;

wobei das optische Totalreflexionselement (2), darin zwischen der Einfallslichteinführungsselte und der Totalreflexionsoberfläche (22) angeordnet, eine optische Elementschicht (12, 13) aufweist, die einen Lichtpfad auswählt, so dass:

durch die Einfallslichteinführungsseite In das optische Totalreflexionselement (2) eingeführtes Licht dann auf die optische Schicht (12, 13) einfällt, die seinen Lichtpfad auswählt, und
alle Komponenten des auf der optischen Schicht (12, 13) einfallenden Lichts, die einen Winkel haben, der größer als ein kritischer Winkel für die Totalreflexion der Totalreflexionsoberfläche (22) ist, durch die optische Schicht (12, 13) transmittiert werden und auf der Totalreflexionsoberfläche (22) einfallen und alle Komponenten des auf der optischen Schicht (12, 13) einfallenden Lichts, die einen Winkel haben, der kleiner als ein kritischer Winkel für die Totalreflexion der Totalreflexionsoberfläche (22) ist, nicht durch die optische Schicht (12, 13) transmittiert werden und somit nicht auf der Totalreflexionsoberfläche (22) einfallen.

**2.** Optische Vorrichtung nach Anspruch 1, wobei die Vorrichtung zusätzlich eine innerhalb des optischen Totalreflexionselements (2) zwischen der Einfallslichteinführungsseite und der Totalreflexionsoberfläche (22) angeordnete weitere optische Schicht (10) aufweist, die einen Lichtpfad von auf der weiteren optischen Schicht (12, 13) durch die Einfallsllchteinführungsselte einfallendem und durch die weitere optische Schicht (10) zu der optischen Elementschicht (12, 13), die einen Lichtpfad auswählt, transmittiertem Licht ändert.

**3.** Optische Vorrichtung nach Anspruch 1 oder Anspruch 2, wobei jedes der optischen Kopplerelemente (4) eine Einheit zum Ändern des optischen Pfads zum Ändern des optischen Pfads des durch das optische Kopplerelement (4) herausgenommenen Lichts enthält.

**4.** Optische Vorrichtung nach Anspruch 3, wobei die Einheit zum Ändern des optischen Pfads den optischen Pfad des herausgenommenen Lichts durch Brechung ändert.

**5.** Optische Vorrichtung nach Anspruch 4, wobei die Einheit zum Ändern des optischen Pfads irgendetwas einer Linsenanordnung, einer Prismenanordnung und eines Linsenelements mit verteiltem Brechungsindex enthält.

**6.** Optische Vorrichtung nach Anspruch 3, wobei die Einheit zum Ändern des optischen Pfads den optischen Pfad des herausgenommenen Lichts durch Beugung ändert.

**7.** Optische Vorrichtung nach Anspruch 6, wobei die Einheit zum Ändern des optischen Pfads irgendetwas eines Volumenhologramms, eines Beugungsgitters eines Phasenmodulationstyps und eines Beugungsgitters eines Amplitudenmodulationstyps enthält.

**8.** Optische Vorrichtung nach Anspruch 3, wobei die Einheit zum Ändern des optischen Pfads den optischen Pfad des herausgenommenen Lichts durch Lichtdiffusion oder durch Lichtstreuung ändert.

**9.** Optische Vorrichtung nach Anspruch 8, wobei die Einheit zum Ändern des optischen Pfads irgendetwas eines porösen Elements, eines anderen Brechungsdispersionselements oder verteilten Elements und eines Lichtdiffusions- oder -streuelements mit einer in einer unebenen Form ausgebildeten Oberfläche enthält.

**10.** Optische Vorrichtung nach Anspruch 1 oder Anspruch 2, wobei jedes der optischen Kopplerelemente (4) eine Einheit zum Absorbieren einer spezifischen Wellenlängenkomponente zum Absorbieren und Emittieren der Lichtkomponente mit spezifischer Wellenlänge des herausgenommenen Lichts enthält.

**11.** Optische Vorrichtung nach Anspruch 1 oder Anspruch 2, wobei jedes der optischen Kopplerelemente (4) eine lichtemittierende Einheit enthält, die durch Empfangen des herausgenommenen Lichts erregt wird, um dadurch Licht zu emittieren.

**12.** Optische Vorrichtung nach einem der vorangehenden Ansprüche, wobei eine Reflexionsschicht zum Einführen von durch das optische Totalreflexionselement (2) reflektiertem und zu einer Einfallslichteinführungsseite der optischen Vorrichtung zurückgebrachtem Einfallslicht wieder zu der optischen Vorrichtung auf einer Einfallslichteinführungsseite des optischen Totalreflexionselements (2) angeordnet ist.

**13.** Anzeigevorrichtung, die folgendes aufweist:

eine planare optische Vorrichtung (100) nach einem der vorangehenden Ansprüche;

wobei die Lichtquelle (60) auf der Einfallslichteinführungsseite der optischen Vorrichtung angeordnet ist,
wobei Licht von der planaren Lichtquelle (60) in die optische Vorrichtung (100) eingeführt wird und durch das optische Kopplerelement (4) aus dem optischen Totalreflexionselement (2) herausgenommenes Licht emittiert wird, um dadurch Bilder anzuzeigen.

**14.** Anzeigevorrichtung nach Anspruch 13, wobei das optische Kopplerelement (4) ein transmissiver Bildfilm mit darin aufgezeichneten Bildern ist.

**15.** Anzeigevorrichtung nach Anspruch 13, wobei jedes der optischen Kopplerelemente (4) fluoreszierende Substanzen enthält und die planare Lichtquelle Licht emittiert, das jeweils eine solche Wellenlänge enthält, dass die fluoreszierende Substanz erregt wird.

**16.** Anzeigevorrichtung nach einem der Ansprüche 13 bis 15, wobei in den vorderen Telbereichen des optischen Pfads der optischen Kopplerelemente (4) ein optisches Filter (69) zum Absorbieren eines Lichts mit einem lichtemittierenden Wellenlängenbereich angeordnet ist.

**17.** Anzeigevorrichtung nach Anspruch 15, wobei In den vorderen Telbereichen des optischen Pfads der optischen Kopplerelemente (4) ein optisches Filter (69) zum Abschirmen von Erregungslicht angeordnet ist.

**18.** Anzeigevorrichtung nach Anspruch 15, wobei zwischen der Totalreflexionsoberfläche (22) des optischen Totalreflexionselements (2) und den optischen Kopplerelementen (4) ein optisches Filter zum Reflektieren von Emissionswellenlängenkomponenten der fluoreszierenden Substanzen und auch zum Zulassen einer Transmission der Wellenlängenkomponenten von Einfallslicht angeordnet ist.

**19.** Anzeigevorrichtung nach Anspruch 18, wobei das optische Filter ein Lichtinterferenzfilter mit einem dielektrischen Mehrschichtfilm ist.

**20.** Anzeigevorrichtung nach Anspruch 18, wobei das optische Filter ein Bragg-Reflexionsfilter mit einem cholesterischen Film ist.

**21.** Anzeigevorrichtung nach einem der Ansprüche 15 bis 20, wobei die Wellenlängen von Einfallslicht in dem Bereich von 350 nm - 400 nm sind.

**22.** Anzeigevorrichtung nach einem der Ansprüche 15 bis 21, wobei die fluoreszierenden Substanzen sichtbares Licht emittieren.

**23.** Anzeigevorrichtung nach Anspruch 22, wobei die fluoreszierenden Substanzen lichtemittierende Substanzen zum Emittieren von rotern, grünem und blauem Licht, welches gemäß den anzuzeigenden Bildern miteinander kombiniert ist, enthalten.

## Revendications

**1.** Dispositif optique plan (100), comprenant :

un élément optique à réflexion totale (2) comportant une surface de réflexion totale (22) sur un côté opposé à son côté introduction de lumière incidente ;
une source de lumière qui éclaire le côté introduction de lumière incidente de l'élément optique à réflexion totale (2), dans lequel l'élément optique à réflexion totale (2) présente la propriété selon laquelle au moins une partie de la lumière incidente introduite dans l'élément optique à réflexion totale (2) est totalement réfléchie au niveau de la surface de réflexion totale (22) de l'élément optique à réflexion totale (2) et selon laquelle la lumière incidente n'est pratiquement pas transmise à travers la surface de réflexion totale (22) ; et
des éléments coupleurs optiques (4) disposés de manière adjacente les uns aux autres dans des positions souhaitées sur la surface de réflexion totale (22) dudit élément optique à réflexion totale (2) en fonction d'images à afficher, dans lequel les éléments coupleurs optiques (4) détruisent la condition de réflexion totale de la lumière incidente sur la surface de réflexion totale (22) de l'élément optique à réflexion totale (2) de manière à coupler la lumière incidente et à permettre la transmission de la lumière incidente à travers la surface de réflexion totale (22) ;

dans lequel l'élément optique à réflexion totale (2) comprend, disposé dans celui-ci entre le côté introduction de lumière incidente et la surface de réflexion totale (22), une couche élément optique (12, 13) qui sélectionne un chemin de lumière, de sorte que :

la lumière introduite dans l'élément optique à réflexion totale (2) par le côté introduction de lumière incidente soit ensuite incidente sur la couche optique (12, 13) qui sélectionne le chemin de lumière de celle-ci, et
toutes les composantes de la lumière incidente sur la couche optique (12, 13) qui ont un angle supérieur à un angle critique de réflexion totale de la surface de réflexion totale (22) soient transmises à travers la couche optique (12, 13) et soient incidentes sur la surface de réflexion totale (22) et que toutes les composantes de la lumière incidente sur l'élément optique (12, 13) ayant un angle inférieur à un angle critique de réflexion totale de la surface de réflexion totale (22) ne soient pas transmises à travers la couche optique (12, 13) et ne soient ainsi pas incidentes sur la surface de réflexion totale (22).

**2.** Dispositif optique selon la revendication 1, dans lequel le dispositif comprend en plus une couche optique supplémentaire (10), disposée dans l'élément optique à réflexion totale (2) entre le côté Introduction de lumière incidente et la surface de réflexion totale (22), qui modifie un chemin de lumière de la lumière incidente sur ladite couche optique supplémentaire (12, 13) à travers le côté introduction de lumière incidente et transmise par le biais de ladite couche optique supplémentaire (10) à la couche élément optique (12, 13) qui sélectionne un chemin de lumière.

**3.** Dispositif optique selon la revendication 1 ou la revendication 2,
dans lequel chacun desdits éléments coupleurs optiques (4) comprend une unité de modification de chemin optique pour modifier le chemin optique de la lumière extraite par ledit élément coupleur optique (4).

**4.** Dispositif optique selon la revendication 3, dans lequel ladite unité de modification de chemin optique modifie le chemin optique de ladite lumière extraite par réfraction.

**5.** Dispositif optique selon la revendication 4, dans lequel ladite unité de modification de chemin optique comprend l'un quelconque des éléments suivants : un réseau de lentilles, un réseau de prismes, et un élément lentille à indice de réfraction distribué.

**6.** Dispositif optique selon la revendication 3, dans lequel ladite unité de modification de chemin optique modifie le chemin optique de ladite lumière extraite par diffraction.

7. Dispositif optique selon la revendication 6, dans lequel ladite unité de modification de chemin optique comprend l'un quelconque des éléments suivants : un hologramme de volume, un réseau de diffraction d'un type modulation de phase et un réseau de diffraction d'un type modulation d'amplitude.

8. Dispositif optique selon la revendication 3, dans lequel ladite unité de modification de chemin optique modifie le chemin optique de ladite lumière extraite par diffusion de lumière ou par dispersion de lumière.

9. Dispositif optique selon la revendication 8, dans lequel ladite unité de modification de chemin optique comprend l'un quelconque des éléments suivants : un élément poreux, un élément à Indice de réfraction distribué ou dispersé différent, et un élément de diffusion ou de dispersion de lumière comprenant une surface formée selon une forme irrégulière.

10. Dispositif optique selon la revendication 1 ou la revendication 2,
dans lequel chacun desdits éléments coupleurs optiques (4) comprend une unité d'absorption de composante de longueur d'onde spécifique pour absorber et émettre la composante de lumière de longueur d'onde spécifique de ladite lumière extraite.

11. Dispositif optique selon la revendication 1 ou la revendication 2,
dans lequel chacun desdits éléments coupleurs optiques (4) comprend une unité d'émission de lumière excitée par la réception de ladite lumière extraite pour émettre ainsi de la lumière.

12. Dispositif optique selon l'une quelconque des revendications précédentes, dans lequel une couche de réflexion destinée à introduire lesdites lumières incidentes réfléchies par ledit élément optique à réflexion totale (2) et renvoyées vers un côté introduction de lumière incidente dudit dispositif optique à nouveau vers ledit dispositif optique est disposée sur un côté introduction de lumière incidente dudit élément optique à réflexion totale (2).

13. Appareil d'affichage, comprenant :

un dispositif optique plan (100) selon l'une quelconque des revendications précédentes ;

dans lequel la source de lumière (60) est disposée sur le côté introduction de lumière incidente dudit dispositif optique, dans lequel des lumières provenant de ladite source de lumière plane (60) sont introduites dans ledit dispositif optique (100) et les lumières extraites dudit élément optique à réflexion totale (2) par ledit élément coupleur optique (4) sont émises pour afficher ainsi des images.

14. Appareil d'affichage selon la revendication 13, dans lequel ledit élément coupleur optique (4) est un film d'image transmissif dans lequel sont enregistrées des images.

15. Appareil d'affichage selon la revendication 13, dans lequel chacun desdits éléments coupleurs optiques (4) comprend des substances fluorescentes et ladite source de lumière plane émet des lumières contenant chacune une longueur d'onde telle qu'elle permet d'exciter lesdites substances fluorescentes.

16. Appareil d'affichage selon l'une quelconque des revendications 13 à 15, dans lequel, dans les parties avant de chemin optique desdits éléments coupleurs optiques (4), est disposé un filtre optique (69) destiné à absorber une lumière ayant une plage de longueur d'onde d'émission de lumière.

17. Appareil d'affichage selon la revendication 15, dans lequel, dans les parties avant de voie optique desdits éléments coupleurs optiques (4), est disposé un filtre optique (69) destiné à protéger la lumière d'excitation.

18. Appareil d'affichage selon la revendication 15, dans lequel, entre la surface de réflexion totale (22) dudit élément optique à réflexion totale (2) et lesdits éléments coupleurs optiques (4), est disposé un filtre optique destiné à réfléchir une composante de longueur d'onde d'émission desdites substances fluorescentes et également à permettre la transmission des composantes de longueur d'onde desdites lumières incidentes.

19. Appareil d'affichage selon la revendication 18, dans lequel ledit filtre optique est un filtre d'interférence de lumière comprenant un film multicouche diélectrique.

20. Appareil d'affichage selon la revendication 18, dans lequel ledit filtre optique est un filtre de réflexion de Bragg comprenant un film cholestérique.

21. Appareil d'affichage selon l'une quelconque des revendications 15 à 20, dans lequel lesdites longueurs d'onde desdites lumières incidentes sont comprises dans la plage de 350 nm à 400 nm.

22. Appareil d'affichage selon l'une quelconque des revendications 15 à 21, dans lequel lesdites substances fluorescentes émettent des lumières visibles.

23. Appareil d'affichage selon la revendication 22, dans lequel lesdites substances fluorescentes comprennent des substances d'émission de lumière pour émettre des lumières rouge, verte et bleue combinées ensemble en fonction des Images à afficher.

# FIG. 1

SURFACE-SHAPE INCIDENT LIGHTS

$\begin{pmatrix} \text{COLLIMATED LIGHT} \\ \text{DIFFUSED LIGHT} \end{pmatrix}$

# FIG. 2

# FIG. 3

**VOLUME HOLOGRAM**

(a)

**DIFFRACTION GRATING
(OF RELIEF TYPE)**

(b)

**DIFFRACTION GRATING
(OF REFRACTIVE INDEX MODULATION TYPE)**

(c)

# FIG. 4

(a)

PLATE COMPOSED OF
POROUS MATERIAL

(b)

20

PLATE COMPOSED OF
DISPERSED OR DISTRIBUTED
MATERIALS HAVING DIFFERENT
REFRACTIVE INDEXES

(c)

LIGHT DIFFUSING OR
SCATTERING INCLUDING
UNEVEN SURFACE

# FIG. 5

# FIG. 6

AIR (n = 1)

GLASS BASE PLATE (n = 1.5)
TOTAL-REFLECTION
CRITICAL ANGLE θc ≒ 40DEG

DIELECTRIC
MULTILAYER FILM

LIGHT DIFFUSING
FILM (n = 1.5)

θ

INCIDENT
LIGHT  θi

FIG. 7

# FIG. 8

(a) θ = 0DEG — SPECTRAL TRANSMITTANCE T [%] vs WAVELENGTH — AVERAGE

(b) θ = 40DEG — P WAVE, AVERAGE, S WAVE

(c) θ = 70DEG — P WAVE, AVERAGE, S WAVE

WAVELENGTH λ [nm]

UV LIGHT SOURCE
WAVELENGTH RANGE

# FIG. 9

# FIG. 10

θw TRANSPARENT MEDIUM ON THE FRONT
SIDE OF TOTAL REFLECTION SURFACE w
(AVERAGE REFRACTIVE INDEX nw)

θv

TRANSPARENT MEDIUM v
(AVERAGE REFRACTIVE INDEX nv)

TRANSPARENT MEDIUM u
(AVERAGE REFRACTIVE INDEX nu)

θu

θs

OPTICAL ELEMENT FOR SELECTING OPTICAL PATH
(AVERAGE REFRACTIVE INDEX ns)

OPTICAL ELEMENT FOR CHANGING OPTICAL PATH
(AVERAGE REFRACTIVE INDEX nt)

θt

EP 1 398 650 B1

# FIG. 11

FIG. 12

# FIG. 13

na = nb

16

(a)

na ≠ nb

(b)

# FIG. 14

(a)

4

(b)

4

(c)

REFRACTIVE
INDEX

# FIG. 15

(a)

PLATE COMPOSED OF
POROUS MATERIAL

(b)

PLATE COMPOSED OF
DISPERSED OR DISTRIBUTED
MATERIALS HAVING DIFFERENT
REFRACTIVE INDEXES

$\left(\begin{array}{l}\text{PLATE COMPOSED OF}\\ \text{DISPERSED PARTICULATES HAVING}\\ \text{HIGH REFRACTIVE INDEX}\end{array}\right)$

(c)

LIGHT DIFFUSING OR
SCATTERING PLATE INCLUDING
UNEVEN SURFACE

# FIG. 16

FIG. 17

(a) INCIDENT LIGHT INTENSITY I — WAVELENGTH λ

(b) SPECTRAL TRANSMITTANCE T — λiS, λiL, Δλ, θ0, λ(θ0), WAVELENGTH λ

(c) SPECTRAL TRANSMITTANCE T — θc, λ(θc), WAVELENGTH λ

(d) SPECTRAL TRANSMITTANCE T — θ1, λ(θ1), WAVELENGTH λ

(e) SPECTRAL TRANSMITTANCE T — θ2, λ(θ2), WAVELENGTH λ

(f) SPECTRAL TRANSMITTANCE T — θ3, λ(θ3), WAVELENGTH λ

# FIG. 18

(a)

3

P‑ ‑ ‑ ‑ ‑ ‑ ‑ ‑ ‑ ‑ ‑ ‑ ‑ ‑ ‑ ‑ ‑ ‑ ‑P

50

RECESSED PORTION    PROJECTED PORTION

(b)

16 (n2)

3

θ > θc    52

θ

α

50 (n3)

54

θi

SURFACE-SHAPED INCIDENT LIGHT

# FIG. 19

5

16 (n2)

58

56 (n8)

50

SURFACE-SHAPED
INCIDENT LIGHT

# FIG. 20

SURFACE-SHAPE INCIDENT LIGHTS
(UV LIGHT)

# FIG. 21

# FIG. 22

EXCITING LIGHT SOURCE

# FIG. 23

EXCITING LIGHT SOURCE

**FIG. 24**

(a)

TOTAL REFLECTION SURFACE

14

10

(b)

TOTAL REFLECTION SURFACE

12

14

10

(c)

TOTAL REFLECTION SURFACE

24

12

14

10

(d)

TOTAL REFLECTION SURFACE

14

12

(e)

TOTAL REFLECTION SURFACE

14

12

18

10

# FIG. 25

IMAGE OUTPUT LIGHT

(a)

79b   79a   79
77
73
71
75

(b)

*ABC*

# FIG. 26